(19) Europäisches Patentamt
European Patent Office
Office européen des brevets

(11) EP 2 004 314 B1

(12) EUROPEAN PATENT SPECIFICATION

(45) Date of publication and mention
of the grant of the patent:
**02.03.2011 Bulletin 2011/09**

(51) Int Cl.:
**B01F 5/06** (2006.01)

(21) Application number: **07727882.8**

(22) Date of filing: **05.04.2007**

(86) International application number:
**PCT/EP2007/053414**

(87) International publication number:
**WO 2007/113335 (11.10.2007 Gazette 2007/41)**

(54) **FLUID FLOW MODIFICATION APPARATUS**

FLUIDSTROMMODIFIKATIONSVORRICHTUNG

APPAREIL DE MODIFICATION DE FLUX DE FLUIDE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.04.2006 GB 0606890**
**25.05.2006 GB 0610455**

(43) Date of publication of application:
**24.12.2008 Bulletin 2008/52**

(73) Proprietor: **Imperial Innovations Limited**
**London SW7 2AZ (GB)**

(72) Inventors:
• **VASSILICOS, John Christos**
**London, Greater London SW7 2AZ (GB)**
• **SEOUD, Richard Elian**
**London, Greater London SW7 2AZ (GB)**
• **HURST, Daryl John**
**London W4 2QR (GB)**

(74) Representative: **Flutter, Paula et al**
**EIP**
**Fairfax House**
**15 Fulwood Place**
**London WC1V 6HU (GB)**

(56) References cited:
**WO-A-00/66257      WO-A-98/14268**
**WO-A-02/092207**

**Description**

Field of the Invention

The present invention relates to apparatus for modifying the properties of a flow field and to a method of selecting an apparatus to achieve a desired flow field. Embodiments of the invention can be used to control the mixing of fluids, heat transfer within and between fluids, acoustic noise, oscillations in fluids, microchip cooling, structural vibrations and chemical reactions. One particular application to which embodiments of the invention are particularly well suited is airbrakes on airborne vehicles.

Background of the Invention

The capability to predict and control flow field characteristics has been the subject of scientific research for a significant period of time. However, as has been realised in the course of many and diverse research projects, flow field behaviour is extremely complex and thus difficult to control by means of artefacts placed within a flow field.

In the period between 1963 and 1966, Corrsin and co-workers spearheaded a research effort directed towards controlling the turbulence within a conduit by means of a grid comprising a two-dimensional uniform mesh disposed symmetrically within the conduit (as comprehensively described in S. Corrsin, Handbook de Physik (1963) 8:254). This research effort showed that low Reynolds number, essentially isotropic and homogeneous turbulence flow, can be generated downstream of the grid. In the period since 1966, various different shaped grids have been tested, but for each of these grids, the cross section of individual grid elements has been identical to that of other elements in the grid.

The feature that is common to the measurement data obtained for any of these known two-dimensional grids is that the turbulence levels, that is to say the fluctuations in velocity over time downstream of the grid, has been limited to extremely low levels. Thus the range of control that is achievable with, and applicability of, such grids to applications such as mixing and noise control, is extremely limited.

It is an objective of the present invention to increase the range within which flow field parameters can be controlled.

Fractal configurations have previously been applied in the field of fluid distribution; for example in the inventions described in WO 02/092207 and W00/66257, in which fluids are conveyed through pipes having a fractal structure.

Summary of the Invention

In accordance with a first aspect of the present invention, there is provided a fluid flow modification grid for creating turbulence in a fluid when said fluid is moving relative to the fluid flow modification grid, the grid comprising:

a plurality of turbulence-creating elements, each turbulence-creating element having a first surface portion against which the fluid can flow and a second surface portion along which the fluid can flow, each surface portion having a surface area associated therewith; and
a support for holding the turbulence-creating elements in the fluid so as to allow relative movement of the fluid around the turbulence-creating elements,
wherein said turbulence-creating elements include at least two different types of element, including a first type of element and a second type of element, and
wherein the first type of element has a first surface area and the second type of element has a second surface area, different to said first surface area, said first and second surface areas having a relationship selected to control the turbulence-creating characteristics of said fluid flow modification grid.

As described above, in embodiments of the invention, the surface area of the first element differs from that of the second element. The turbulence-creating elements can be defined such that the first surface portion of the first type of element has a first width and the first surface portion of the second type of element has a second width, so that the variation in surface area can be achieved by setting the second width to be different to the first width. Alternatively and/or additionally the turbulence-creating elements can be defined such that the first surface portion of the first type of element has a first length and the first surface portion of the second type of element has a second length so that the variation in surface area can be achieved by setting the second length to be different to the first length.

As will be expected from the foregoing, since the first surface portion is a surface against which the fluid flows, the first surface portion effectively presents an obstruction to the oncoming fluid, causing the fluid to pass around the turbulence-creating elements. The second surface portion, however, is a surface along which the fluid flows, and therefore presents resistance to the oncoming flow (in the form of friction) as it passes around the elements, leading to development of a shear layer along the second surface portion. The characteristics of the shear layer that is created thereby are dependent on the width of the second surface portion, and since the properties of the shear layer have a significant bearing on the flow field downstream of the fluid flow modification grid, the turbulence created by the fluid flow modification grid can further be controlled by varying the width of the second surface portion between respective types of elements.

Embodiments of fluid modification apparatus are referred to herein as grids and because the grids are composed of elements having different surface areas, the levels of turbulence that can be generated downstream of a given grid are greater than is achievable using the classical grids of Corrsin described above. By varying the surface area of the second type of elements, either in absolute terms or compared with that of the first type of elements, the levels of turbulence can be modified.

Preferably the turbulence-creating elements are arranged such that at least one of said first type of element is attached to at least one of said second type of element. The turbulence-creating elements can be generally elongate and of generally uniform thickness along their length, and can be arranged in a generally planar configuration.

Preferably the turbulence-creating elements are arranged in a multi-scale configuration. By multi-scale is meant that the thickness and/or length and/or depth of turbulence-creating elements of the first type of turbulence-creating element differs from that (or those) of the second type of turbulence-creating element. This relationship can most conveniently be quantified in terms of a ratio between the types of turbulence-creating elements: in one arrangement the turbulence-creating elements can be arranged in a fractal configuration comprising two or more fractal levels, such that the ratio of thickness and/or length and/or depth of turbulence-creating elements is constant between the fractal levels; in an alternative arrangement the turbulence-creating elements can be arranged in a multi-fractal configuration comprising two or more multi-fractal levels, such that the ratio of thickness and/or length and/or depth of turbulence-creating elements varies between respective multi-fractal levels.

In the case of a fractal configuration, the ratio of thickness and/or length and/or depth between turbulence-creating elements at different fractal levels can be within the ranges of 1.1 and 3; 1.2 and 2.7; or 1.3 and 2.6. The ratio can be chosen to be 1.35, 1.71, 2.05, 2.35 or 2.58, but any suitable values falling within the afore-mentioned ranges could be selected.

Conveniently the grids can be described as comprising a plurality of sets of said turbulence-creating elements: in a first arrangement a first said set comprises one of said first type of turbulence-creating elements and a second set comprises a plurality of said second type of turbulence-creating elements. In another arrangement the grid comprises three or more sets of turbulence-creating elements, the structures of at least one of the sets comprising turbulence-creating elements of a surface area different to the surface area associated with another of the sets of structures.

In a particularly preferred configuration, the turbulence-creating elements are arranged in structures, each said structure including a plurality of elongate members. The structures can include a structure having two elongate members, in which one said elongate member is attached to the other said elongate member part way along respective lengths of respective elongate members so as to form a cross-shaped structure. Alternatively the structures can include a structure having three elongate members, in which a first said elongate member has two ends and is attached to a second elongate member and to a third elongate member at respective ends of the first elongate member so as to attach to the second elongate member and the third elongate member part way along their respective lengths. An I-shaped structure is an example of one such structure. As a further alternative the structures can include a structure having a plurality of elongate members such that each member is in an end-to-end relationship with another elongate member so as to form a polygon (comprising three or more members); a particularly preferred example of this type comprises four elongate members so that the structure is square-shaped.

The elongate members can be integrally formed with other elongate members of a given structure, or the structures can comprise an attachment point for providing separable interconnection between respective elongate members of the structure. In the latter case the structures might be interconnected so as to form a grid that comprises a plurality of planes. In one arrangement the grids are arranged such that elongate members of the first structure engage with elongate members of at least one second structure; in the case where the structures are fabricated from a planar sheet such engagement between elongate members is inherent in the grid design.

Further features and advantages of the invention will become apparent from the following description of preferred embodiments of the invention, given by way of example only, which is made with reference to the accompanying drawings.

Brief Description of the Drawings

Figure 1a is a schematic diagram of a conduit in which fluid modification apparatus according to an embodiment of the invention can operate;
Figure 1b is a schematic diagram showing side and end view of a wind tunnel section arranged to accommodate fluid modification apparatus according to embodiments of the invention;
Figures 2a and 2b are schematic diagrams showing fluid modification apparatus according to a first embodiment of the invention;

Figure 2c is a perspective diagram showing a three dimensional view of a section of the fluid modification apparatus shown in Figures 2a and 2b;

Figures 3a - 3e are schematic diagrams showing different arrangements of the fluid modification apparatus according to the first embodiment shown in Figure 2b;

Figure 4 is a schematic diagram showing normalised pressure drop across grids according to the invention;

Figures 5a and 5b are schematic diagrams showing fluid modification apparatus according to a second embodiment of the invention;

Figures 6a - 6j are schematic diagrams showing different arrangements of the fluid modification apparatus according to the second embodiment shown in Figure 5b;

Figures 7a, 7b and 7c are schematic diagrams showing fluid modification apparatus according to a third embodiment of the invention;

Figures 8a - 8g are schematic diagrams showing different arrangements of the fluid modification apparatus according to the third embodiment shown in Figure 7c;

Figure 9 shows a graphical representation of measurement data taken in the axial direction along a centre line of the conduit shown in Figure 1b for fluid modification apparatus according to various of the first embodiments shown in Figures 3a - 3e;

Figure 10 shows a graphical representation of measurement data taken in the axial direction along a centre line of the conduit shown in Figure 1b for fluid modification apparatus according to various of the second embodiments shown in Figures 6a - 6e;

Figure 11 shows a graphical representation of measurement data taken in the axial direction along a centre line of the conduit shown in Figure 1b for fluid modification apparatus according to various of the third embodiments shown in Figures 8a - 8g;

Figure 12 is a schematic flow diagram showing steps involved in a grid selection routine according to an embodiment of the invention;

Figure 13 is a schematic flow diagram showing steps involved in a grid selection routine according to another embodiment of the invention;

Figure 14 is a schematic diagram showing use of a grid as an airbrake; and

Figure 15 is a schematic diagram showing an arrangement comprising a plurality of the airbrakes shown in Figure 14 affixed to a portion of a wing.

In the figures, the same reference numerals are used to refer to the same parts and process steps; in relation to any given part, different embodiments thereof are assigned the same reference number as utilised in other embodiments, incremented by 100.

Detailed Description of the Invention

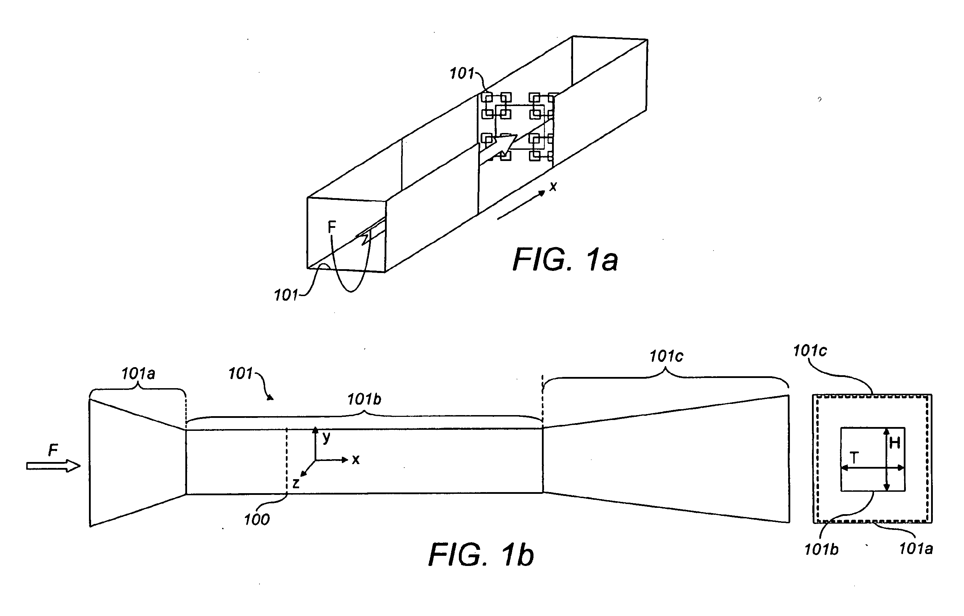

As described above, embodiments of the invention are concerned with controlling the properties of a flow field, the flow field being generated by relative movement between fluid and a body. In a first arrangement this relative movement is generated by fluid F flowing through a conduit such as conduit 101, shown part-open in Figure 1a. The conduit 101 can be any channel suitable for carrying fluid, of rectangular, circular or other suitable cross-section, and capable of accommodating fluid modification apparatus 100 therein.

In one arrangement the conduit 101 comprises a wind tunnel, which, as known in the art, typically comprises a contraction section 101a for directing the fluid into a test section 101b, within which fluid modification apparatus 100 in the form of a grid is situated, and an exit section 101 c, which acts to diffuse the fluid as it exits the conduit. The wind tunnel facilitates measurement of the effects of the fluid modification apparatus 100 on the flow field. The test section 101b of the wind tunnel comprises a rectangular cross section, of width T and height H, and the fluid modification apparatus 100 extends across the full cross section of the test section 101b.

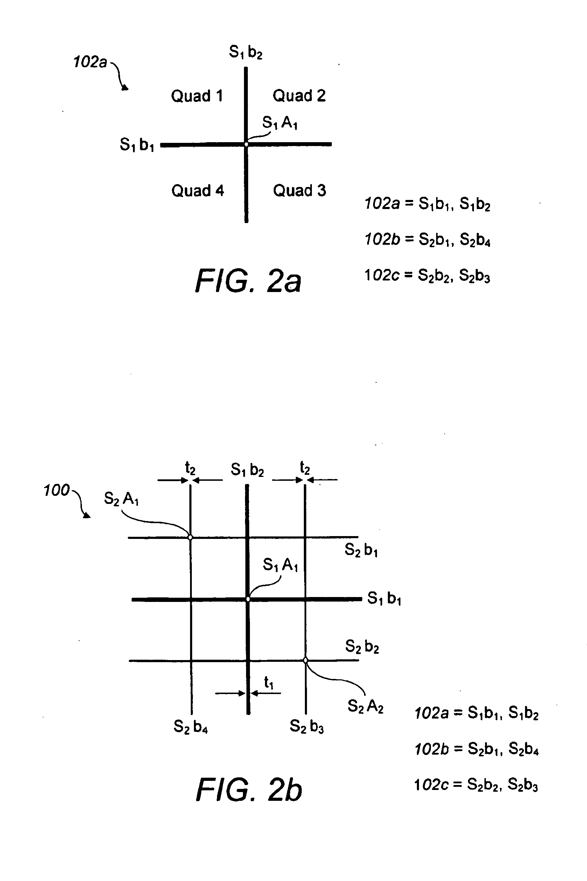

Turning now to Figures 2a and 2b, a first embodiment of the fluid modification apparatus 100, hereinafter referred to as a grid, will be described. The grid 100 comprises a plurality of grid elements that are arranged symmetrically with respect to the axis of the test section 101b; the grid elements are selected so as to generate turbulence within fluid flow therethrough and in this embodiment the grid elements are embodied as generally elongate members, substantially uniform along their length, and arranged so as to form a cross-like structure 102a shown in Figure 2a.

In this particular example the grid 100 comprises three structures: the first structure 102a is composed of elongate members $S_1b_1$ and $S_1b_2$; the second structure 102b is composed of elongate members $S_2b_1$ and $S_2b_4$; and the third structure 102c is composed of elongate members $S_2b_2$ and $S_2b_3$. For each respective structure the elongate members are interconnected via an attachment point, indicated in Figure 2a for the first structure 102a by reference

$S_1A_1$. The attachment point is either embodied as an attachment means that enables respective elongate members to separably attach to one another, or is an integral part of the respective elongate members, and configured such that any given structure is part of one planar sheet. It will be noted that the individual members of a given structure abut those of another structure: the grid 100 is configured such that these abutting members engage with one another so as to prevent relative movement between individual structures while the fluid flows therethrough; when the grid 100 is embodied as an integral planar sheet, prevention of lateral movement is an inherent feature of the grid design.

Whilst not shown in Figure 2b, the grid 100 also includes a support for engaging the grid 100 with a positioning mechanism within the wind tunnel 101b, the support being configured so as to enable relative movement between the grid 100 and fluid.

As can be seen from Figure 2b, and according to a first grid definition (hereinafter referred to as the non-symmetrical definition) the elongate members $S_1b_1$ and $S_1b_2$ of the first structure 102a have a thickness different to that of the members of the second and third structures 102b, 102c, and the thickness of these second and third structures 102b, 102c is identical. Accordingly, in this example the grid comprises two sets $S_1$, $S_2$ of structures, and respective sets differ from one another by virtue of the thickness of the members of the structures.

In the example shown in Figure 2b, the first set $S_1$ comprises one cross structure 102a and the second set $S_2$ comprises two structures 102b, 102c; alternative arrangements can include three, or more, sets of structures, and the actual number of sets, numbers of structures within a set, and the thickness of individual members of the respective structures, serve to define the nature and degree of blockage presented by the grid 100 to the incoming fluid F. These features can be defined by means of the following grid parameters: Number of sets of structures, N; blockage ratio, $\sigma$ (i.e. the amount of the cross-sectional area of the conduit 101 is blocked by the grid); ratio of the thickness between the thickest and thinnest members in the grid, $t_r$; and the effective mesh size, $M_{eff} \left( = \dfrac{4T^2(1-\sigma)^{1/2}}{P} \right.$,

, where P is roughly twice the sum of all of the lengths of members making up the grid 100). It is to be noted that according to the foregoing definition of the grid 100, the elongate members structures $S_2b_1$ and $S_2b_4$; $S_2b_2$ and $S_2b_3$ making up structures 102b, 102c respectively of the second set $S_2$ each form a non-symmetrical cross structure (non-symmetrical in so far as the attachment point is not located half-way along the lengths of respective elongate members).

According to an alternative definition of the grid 100 (hereinafter referred to as the symmetrical definition), a structure is considered to be a member of a successive set if it is symmetrically disposed around a structure of the previous set; in accordance with this definition the second set $S_2$ of grid 100 could alternatively be viewed as comprising four symmetrical cross structures, each of the four being disposed in a quadrant of the structure 102a of the first set $S_1$. According to this symmetrical definition, the elements of the grid 100 are arranged in a fractal configuration, since the grid can be subdivided into parts, each of which is a smaller copy of the whole grid.

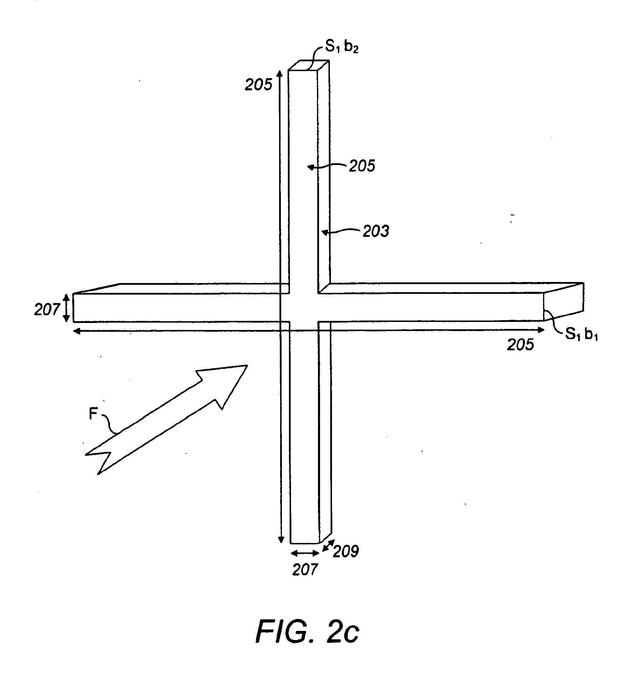

Turning now to Figure 2c, which shows a perspective view of the cross structure 102a shown in Figure 2a, it can be seen that fluid F flows against a first surface portion 201 and along, or past, a second surface portion 203 of the grid 100. Thus the first surface portion 201 presents an obstruction to the incoming flow F, while the second surface portion 203 lies parallel to, and is responsible for, the shear layer that builds up along the second surface portion 203 of each structure. In the arrangement shown in Figure 2c, individual elongate members are shown as having a rectangular cross-section, but it will be appreciated that they can alternatively have a circular cross-section, in which the case the surface portions 201, 203, would comprise curved surface portions.

In the foregoing description of the first embodiment of the invention, the turbulence generated downstream of the grid 100 is controlled by means of thickness variation between sets S1, S2 of structures, which in terms of Figure 2c amounts to variation in width 207 of the first surface portion 201; however, the turbulence could alternatively be modified by varying the length 205 between sets S1, S2 of structures, or indeed by modifying the width 209 of the second surface portion 203. It can be expected that selection of a given geometric parameter - for the purposes of modification - will be dependent on the intended use of the grid, since turbulence distribution, homogeneity and magnitude differs with configuration of respective turbulence-creating elements. It should be noted that for clarity purposes the second and third embodiments discussed below are described in the context of the effects of modification of the width ("thickness") of the first surface portion 201 between sets $S_1$, $S_2$ of structures; however, it should be appreciated that, as for the cross-grids and discussed with reference to Figure 2c, the length 205 or depth 209 of structures of these embodiments could additionally or alternatively be varied.

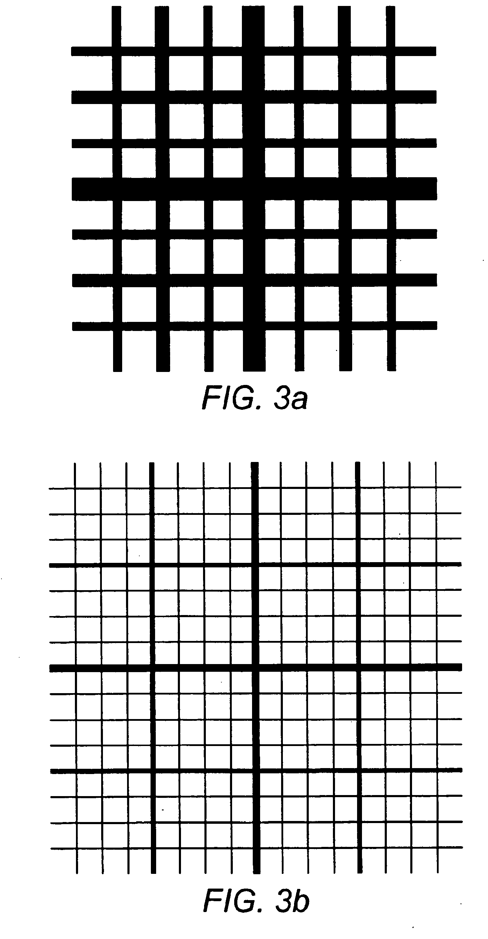

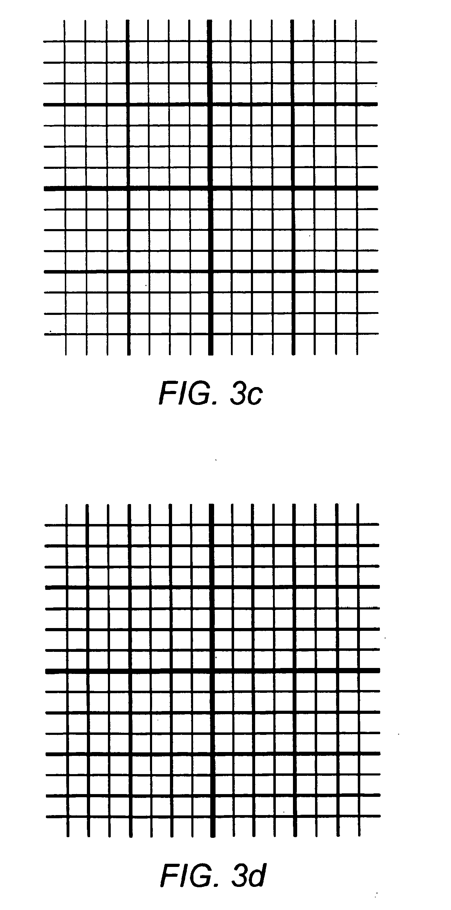

Figures 3a - 3d show various different grid configurations for which there are three sets of structures and for which the grid is situated within a tunnel having width, T, of 0.46m: in a first configuration (Figure 3a), $\sigma$ is 40%, $t_r$ is 3.3; and $M_{eff}$ = 114 mm; in a second configuration (Figure 3b), $\sigma$ is 17%, $t_r$ is 5.0; and $M_{eff}$ = 57 mm; in a third configuration (Figure 3c), $\sigma$ is 21%, $t_r$ is 2.8; and $M_{eff}$ = 57 mm; and in a fourth configuration (Figure 3d), $\sigma$ is 29%, $t_r$ is 2.0; and $M_{eff}$ = 57 mm.

According to the non-symmetrical definition of a given structure adopted in Figure 2b, in the configurations of Figures 3a - 3c, the first set $S_1$ comprises one structure and the second set $S_2$ comprises two structures, whereas in the fourth configuration (Figure 3d) the second set $S_2$ comprises six structures. In relation to the third set, $S_3$, the first configuration (Figure 3a) comprises four structures, the second and third configurations (Figures 3b, 3c) comprise twelve structures and the fourth configuration (Figure 3d) comprises six structures. In each of these four grid configurations (Figure 3a - Figure 3d) the relationship between thicknesses of structures of respective sets can be quantified as a ratio, which in the case of a fractal grid, is constant between respective sets of structures; if $t_1$ denotes the thickness of structures in the first set $S_1$, $t_2$ denotes the thickness of structures in the second set $S_2$, and $t_3$ denotes the thickness of structures in the third set $S_3$, and assuming grid to be a fractal grid (meaning that the ratio is constant between the three

sets $S_1$, $S_2$, $S_3$,) $\dfrac{t_1}{t_2} = \dfrac{t_2}{t_3} = R_t$ . As defined above, the ratio between the thickest and the thinnest elongate members

is given by $t_r$: $t_r$: $\dfrac{t_1}{t_3} = t_r$ , , so that $t_2 = \dfrac{t_1}{\sqrt{t_r}}$ and $t_3 = \dfrac{t_2}{\sqrt{t_r}}$ . Alternatively the ratio $R_t$ could vary between sets of structures, leading to what is herein referred to as a multi-fractal grid.

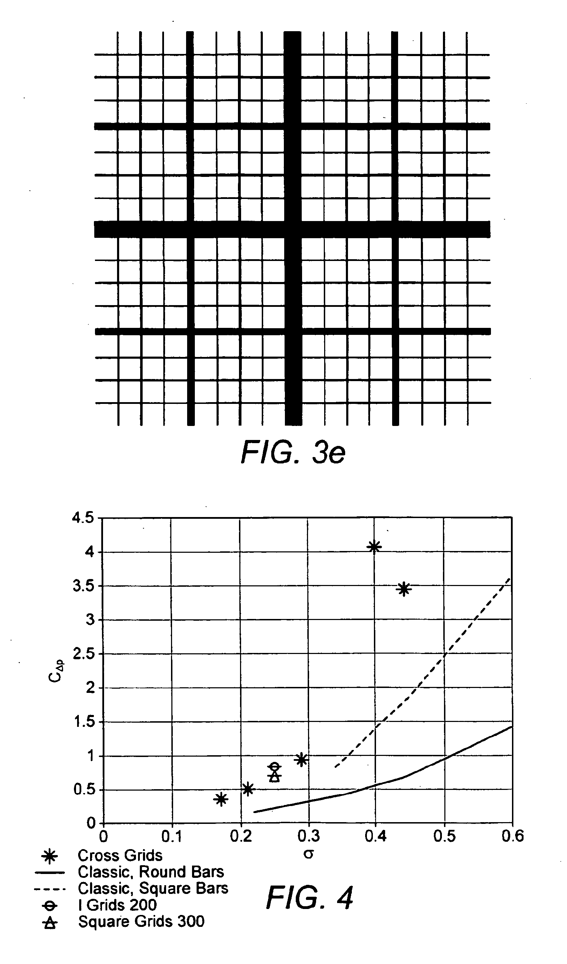

Figure 3e shows a particularly preferred arrangement in which the number of sets is four: again, according to the non-symmetrical definition of the grid 100, the first set $S_1$ comprises one structure, the second set $S_2$ comprises two structures, the third set $S_3$ comprises four structures and the fourth set $S_4$ comprises eight structures.

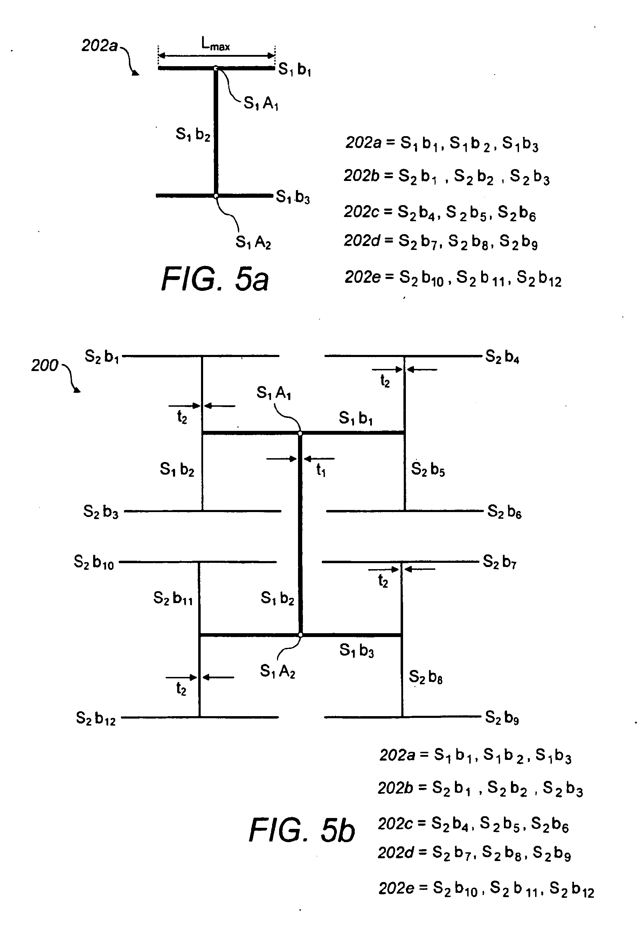

Turning now to Figures 5a and 5b, a second embodiment of the grid 200 will now be described; in this embodiment the grid elements comprise a plurality of structures 202, each in the form of the I structure 202a shown in Figure 5a; in the example shown in Figure 5b there are five such structures: the first structure 202a is composed of elongate members $S_1b_1$, $S_1b_2$, $S_1b_3$; the second structure 202b is composed of elongate members $S_2b_1$, $S_2b_2$, $S_2b_3$; the third structure 202c is composed of elongate members $S_2b_4$, $S_2b_5$, $S_2b_6$; the fourth structure 202d is composed of elongate members $S_2b_7$, $S_2b_8$, $S_2b_9$; and the fifth structure 202e is composed of elongate members $S_2b_{10}$, $S_2b_{11}$, $S_2b_{12}$. For each respective structure the elongate members are interconnected via an attachment point, indicated in Figure 5a for the first structure 202a by references $S_1A_1$ and $S_1A_2$. As for the first embodiment, the attachment points are either embodied as an attachment means that enables respective elongate members to separably attach to one another, or as an integral part of the respective elongate members, such that any given structure is part of one planar sheet.

It will be noted that the ends of individual members of the first structure 202a abut members of the other four structures: the grid 200 is configured such that individual structures engage with one another at the abutment points so as to prevent relative movement while the fluid flows therethrough (in the case where the grid 200 is manufactured from a planar sheet, suppression of relative movement between sets of structures is inherent).

The number of structures making up a given set is constrained by a symmetry condition, which specifies that, with the exception of structures in the last set, each unconnected end of an elongate member in a given set is required to abut a structure in the next set. Accordingly, grid elements according to this second embodiment are arranged in a fractal configuration, since the grid 200 comprises a geometric pattern that is repeated at various scales and can be subdivided into parts, each of which is a smaller copy of the grid as a whole.

As can be seen from Figure 5b, the elongate members $S_1b_1$, $S_1b_2$, $S_1b_3$ of the first structure 202a have a thickness different to that of the members of the second - fifth structures 202b ... 202e, and the thickness of these second - fifth structures 202b ... 202e is identical. Accordingly, for an example in which the grid 200 comprises two sets $S_1$, $S_2$ of structures, respective sets differ from one another by virtue of the thickness of the members of the structures.

Whilst the examples shown in Figure 5b comprise two sets of structures, $S_1$, $S_2$, the grid 200 can comprise any number of sets of structures within the constraints of the overall grid configuration, namely that none of the elongate members should cross over another elongate member. This constraint gives rise to a set of geometrical constraints for the ratio between thicknesses of members of respective structures ($R_t$, as described above), and the ratio between lengths of members of respective structures, $R_L$, which, for fractal grids, is constant between sets of structures and for multi-fractal grids can vary between sets of structures (in the case of fractal grids $\dfrac{L_1}{L_2} = \dfrac{L_2}{L_3} = R_L$ where $L_1$ denotes

the length of structures in the first set $S_1$, $L_2$ denotes the length of structures in the second set $S_2$, and $L_3$ denotes the length of structures in the third set $S_3$). For example, in the case of a fractal grid, one such set specifies $R_L \le 0.6$ and $R_t \le 1$.

The parameter $R_L$ is related to a further grid parameter, namely the fractal dimension $D_f$ of a given grid:

$$D_f \approx \frac{\log B}{\log(1/R_L)}$$ , , where B is the multiplier between the number of structures in successive sets of structures (when a grid is defined according to the symmetrical definition such that a structure is considered to be a member of a successive set if it is symmetrically disposed around structure of the previous set), and as can be seen from Figure 5b, B = 4.

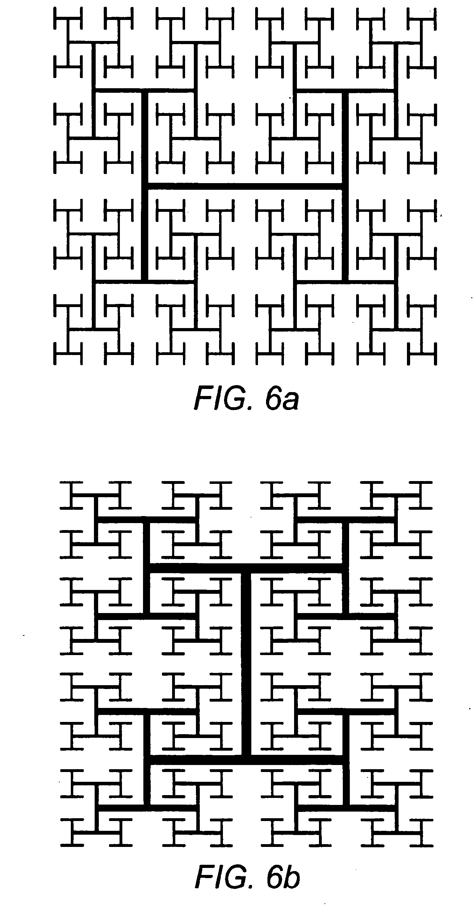

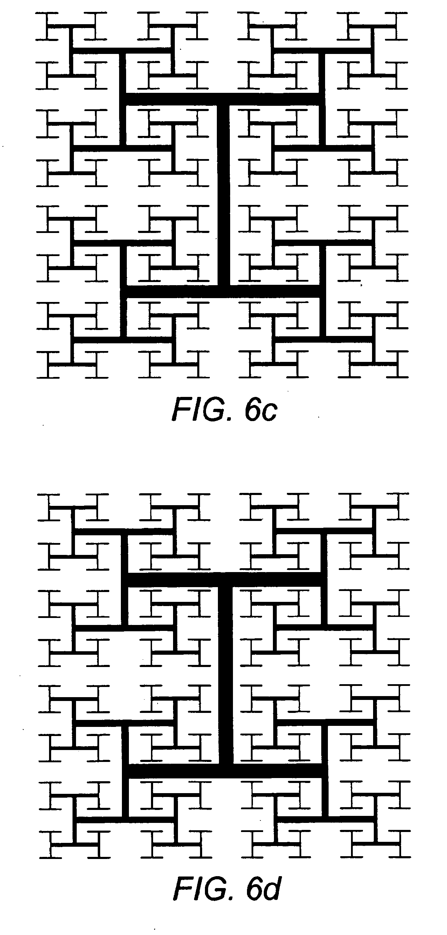

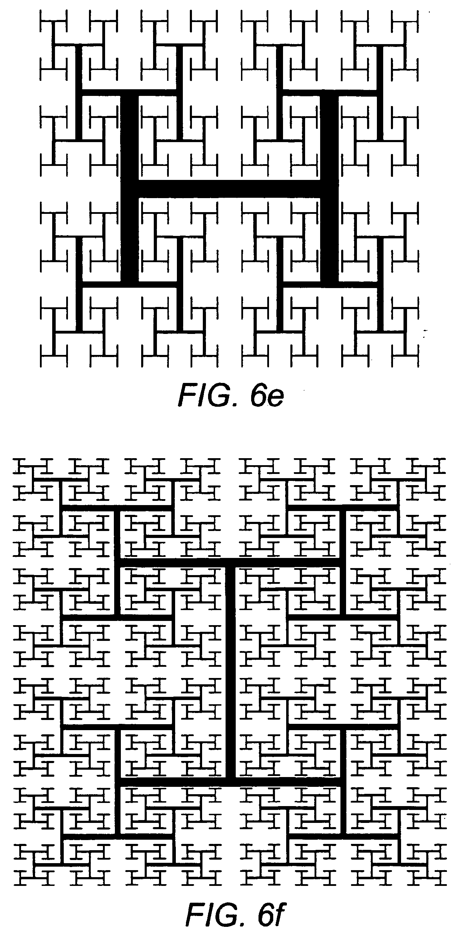

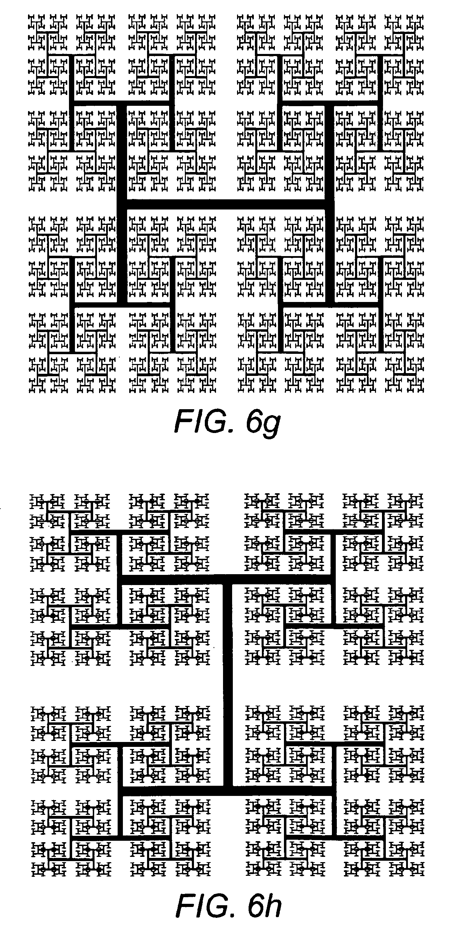

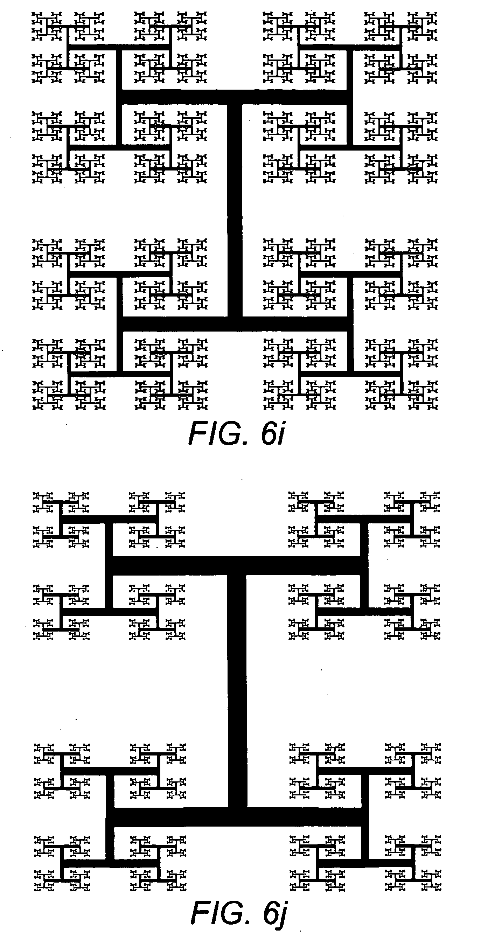

Figures 6a - 6e show various different grid configurations for which there are four sets of structures and for which the grid is situated within a tunnel having a width, T, of 0.46m: in each configuration the blockage ratio, $\sigma$ is 25% and the fractal dimension of the grids, $D_f$, is 2.0. In the first configuration (Figure 6a) $t_r$ is 2.5 and $M_{eff}$ = 36.9 mm; in a second configuration (Figure 6b), $t_r$ is 5.0 and $M_{eff}$ = 36.4 mm; in a third configuration (Figure 6c), $t_r$ is 8.5 and $M_{eff}$ = 35.9 mm; in a fourth configuration (Figure 6d), $t_r$ is 13.0 and $M_{eff}$ = 35.7 mm; and in a fifth configuration (Figure 6e), $t_r$ is 17.0 and $M_{eff}$ = 35.5 mm. In each configuration shown in Figures 6a - 6e, the first set $S_1$ comprises one structure, the second set $S_2$ comprises two four structures, the third set $S_3$ comprises sixteen structures and the fourth set $S_4$ comprises sixty-four structures; it will thus be appreciated that according to the symmetrical definition, the number of structures $n_i$ associated with a given set $S_i$, $n_i = 4^{(i-1)}$.

Further grid configurations according to the second embodiment are shown in Figures 6f - 6j: Figure 6f shows a grid 200 having five sets of structures, and Figures 6g - 6j shows grids having six sets of structures and fractal dimensions $D_f$ of 1.98, 1.87, 1.79 and 1.68 respectively; these latter Figures clearly show the effect of fractal dimension $D_f$ on blockage distribution across the grid 200. It will be appreciated from the foregoing that a grid can comprise various numbers of structures and indeed sets of structures, and should not be limited to the 2, 3, 4, 5 or 6 sets of structures illustrated in the accompanying figures.

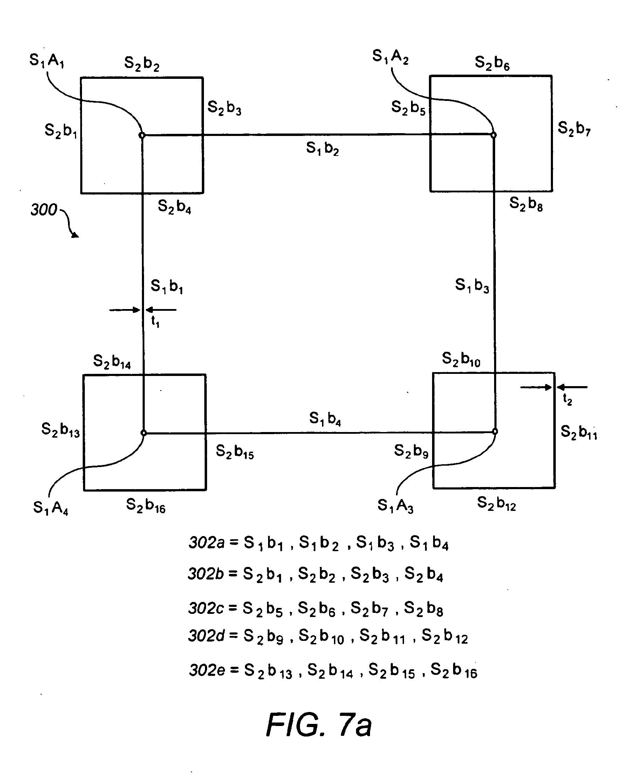

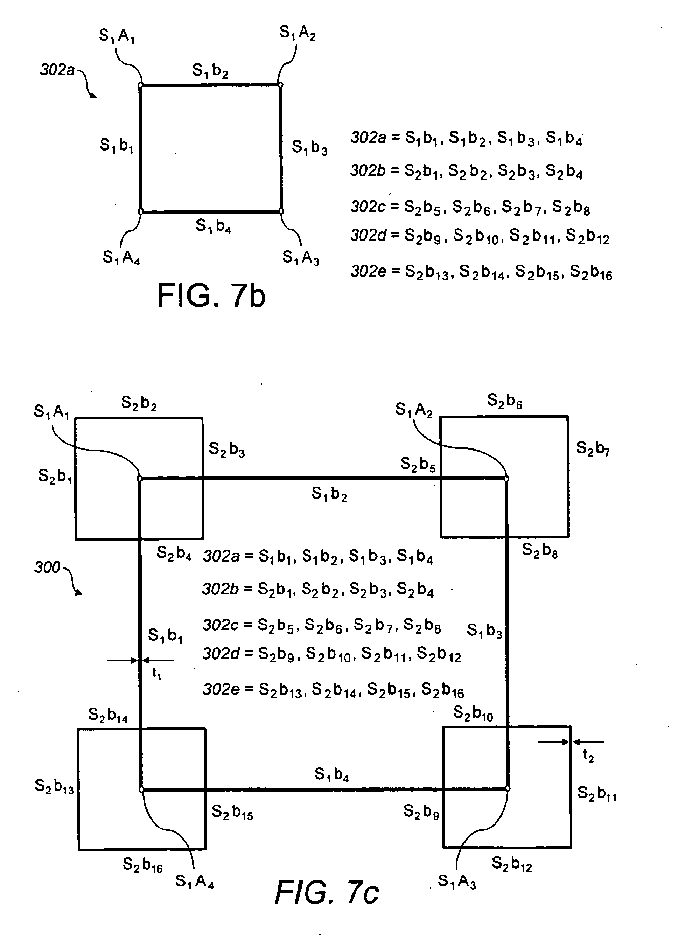

Turning now to Figures 7a, 7b and 7c, a third embodiment of the grid 300 will be described; in this embodiment the grid elements comprise a plurality of structures 302, each in the form of a polygon. In the examples shown in Figures 7a - 7c the polygon is embodied as a square, but it could alternatively be triangular, rectangular, hexagonal or any other structure comprising members joined in an end-to-end configuration; in the case of the grid elements comprising square structures, and for the example shown in Figure 7a there are five such structures: the first structure 302a is composed of elongate members $S_1b_1$, $S_1b_2$, $S_1b_3$, $S_1b_4$; the second structure 302b is composed of elongate members $S_2b_1$, $S_2b_2$, $S_2b_3$, $S_2b_4$; the third structure 302c is composed of elongate members $S_2b_5$, $S_2b_6$, $S_2b_7$, $S_2b_8$; the fourth structure 302d is composed of elongate members $S_2b_9$, $S_2b_{10}$, $S_2b_{11}$, $S_2b_{12}$; and the fifth structure 302e is composed of elongate members $S_2b_{13}$, $S_2b_{14}$, $S_2b_{15}$, $S_2b_{16}$. For each respective structure the elongate members are interconnected via an attachment point, indicated in Figures 7a and 7b for the first structure 302a by references $S_1A_1$, $S_1A_2$, $S_1A_3$ and $S_1A_4$. As for the first and second embodiments, the attachment points are either embodied as an attachment means that enables respective elongate members to separably attach to one another, or is an integral part of the respective elongate members, such that the grid 300 is manufactured from one planar sheet.

In a first arrangement of this third embodiment, shown in Figure 7a, the elongate members of a given structure have the same thickness as that of members of any other structure, since a grid structure comprising grid elements, or elongate members, joined in an end-to-end configuration is itself novel. In an alternative arrangement, and as can be seen from Figure 7c, the elongate members of the first structure 302a can have a thickness different to that of the members of the second - fifth structures 302b ... 302e, and the thickness of these second - fifth structures 302b ... 302e is identical. From a review of Figures 7a and 7c it will be noted that in either arrangement, each of the structures 302b - 302e of the second set $S_2$ abut two of the elongate members of the structure 302a of the first set $S_1$ (for example, members $S_2b_3$ and $S_2b_4$ of structure 302b abut elongate members $S_1b_2$ and $S_1b_2$ respectively of the first structure 302a). As a result each elongate member of a structure in a given set has two crossing points and the grid 300 is configured such that these crossing points are arranged so as to prevent relative movement between structures while the fluid flows therethrough (in the case where the grid 300 is manufactured from a planar sheet, suppression of relative movement between sets of structures is inherent).

As for the first and second embodiments, grid elements according to the third embodiment are arranged in a fractal configuration, since the grid comprises a geometric pattern that is repeated at various scales and can be subdivided into parts, each of which is a smaller copy of the grid as a whole.

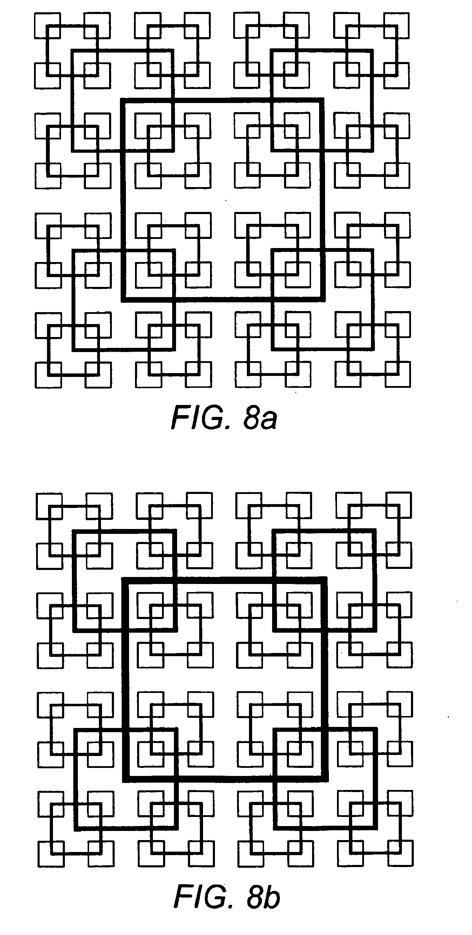

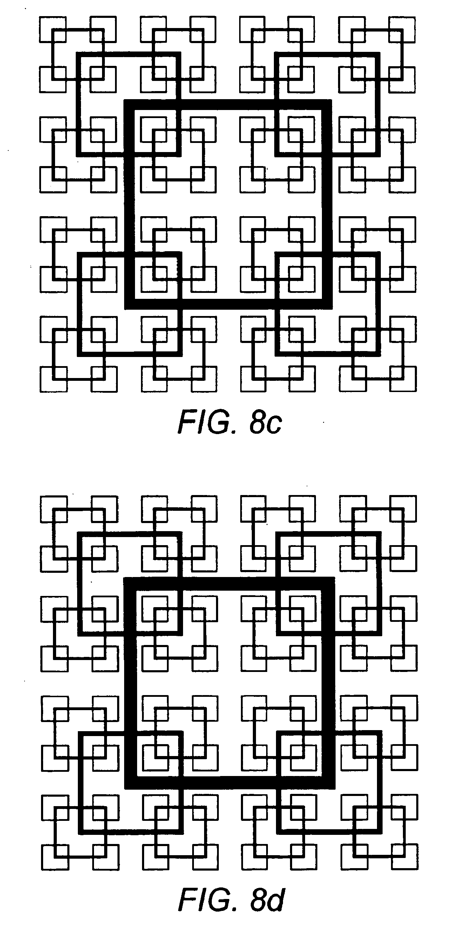

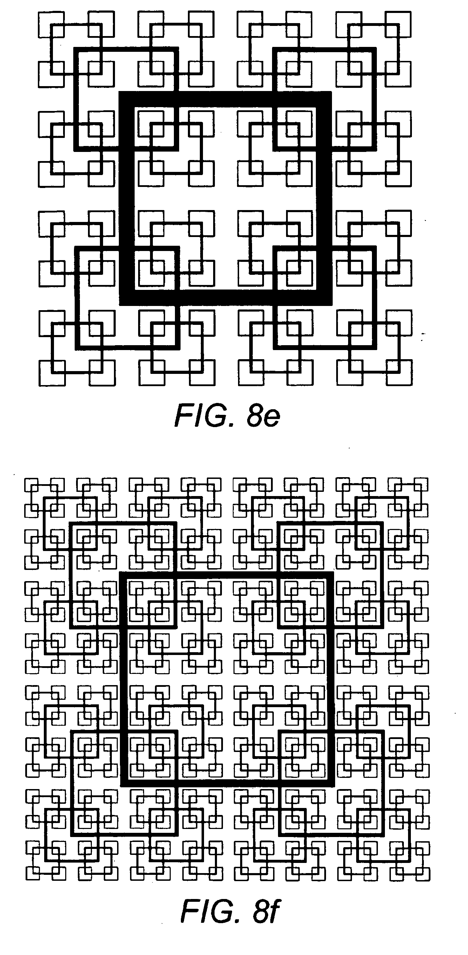

Figures 8a - 8e show various different grid configurations for which there are four sets of structures and for which the grid is situated within a tunnel having a width, T, of 0.46m: in each configuration the blockage ratio, $\sigma$ is 25% and the fractal dimension of the grids, $D_f$, is 2.0. In the first configuration (Figure 8a) $t_r$ is 2.5 and $M_{eff}$ = 26.6 mm; in a second configuration (Figure 8b), $t_r$ is 5.0 and $M_{eff}$ = 26.5 mm; in a third configuration (Figure 8c), $t_r$ is 8.5 and $M_{eff}$ = 26.4 mm; in a fourth configuration (Figure 8d), $t_r$ is 13.0 and $M_{eff}$ = 26.3 mm; and in a fifth configuration (Figure 8e), $t_r$ is 17.0 and $M_{eff}$ = 26.2 mm. It is to be noted that, as for the example of two sets shown in Figure 7c, each elongate member in a given set has two crossing points where the member abuts members of structures within the next set (for all sets for which there is a next set).

In each configuration shown in Figures 8a - 8e, and according to the symmetrical grid definition, the first set

$S_1$ comprises one structure, the second set $S_2$ comprises four structures, the third set $S_3$ comprises sixteen structures and the fourth set $S_4$ comprises sixty-four structures; it will thus be appreciated that for this embodiment, the number of structures $n_i$ associated with a given set $S_i$, $n_i=4^{(i-1)}$. In the case of a grid comprising triangular structures, the number of structures associated with a given set $S_i$, $n_i=3^{(i-1)}$; thus for a grid comprising a closed p-sided structure, the number of structures $n_i$ associated with a given set $S_i$, $n_i=p^{(i-1)}$. The total number of structures in a grid having q sets can then be derived from the following expression:

$$\text{Total no. structures} = \sum_{i=1}^{i=q} p^{i-1}$$

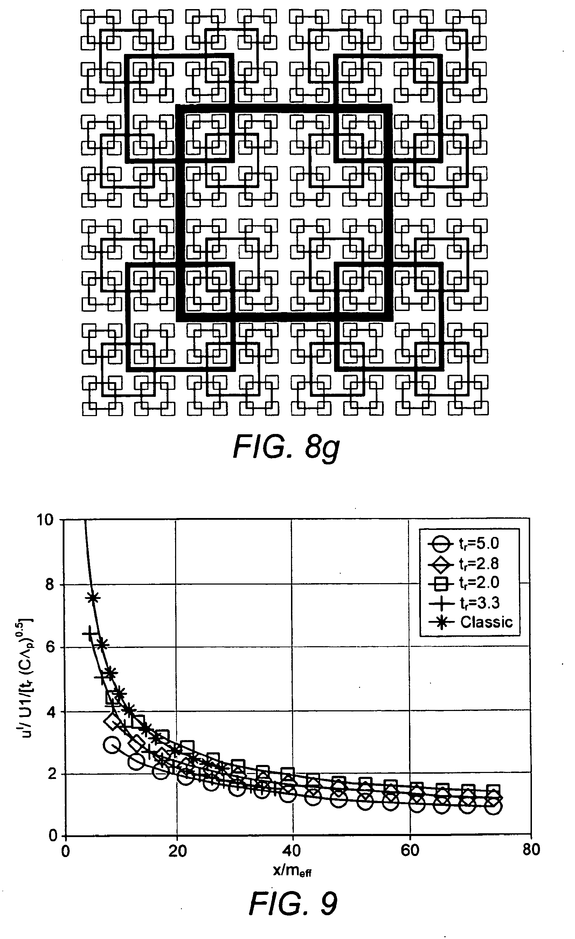

Further grid configurations are shown in Figures 8f and 8g: Figure 8f shows a grid 300 having five sets of structures, $D_f$ of 2.0 and $t_r$ of 17.0 and 28.0 respectively; these latter Figures clearly show the effect of fractal dimension thickness ratio, $t_r$, on blockage distribution across the grid 300.

Turning back to Figure 4, it can be seen that for a given blockage ratio, σ, the normalised static pressure drop, $C_{\Delta P}$ (where $C_{\Delta P} \equiv \dfrac{2\Delta P}{\rho U^2_\infty}$) achievable across the grid, is significantly greater when using grids according to the invention than is achievable using known grids (which, as described in the introductory section, comprise a plurality of structures of a uniform size). Furthermore, and particularly surprisingly, the inventors have identified that for a given blockage ratio the pressure drop $C_{\Delta P}$ is independent of <u>how</u> the blockage is distributed: in other words, the pressure drop $C_{\Delta P}$ appears to be insensitive to different arrangements of sets of structures having the same blockage ratio.

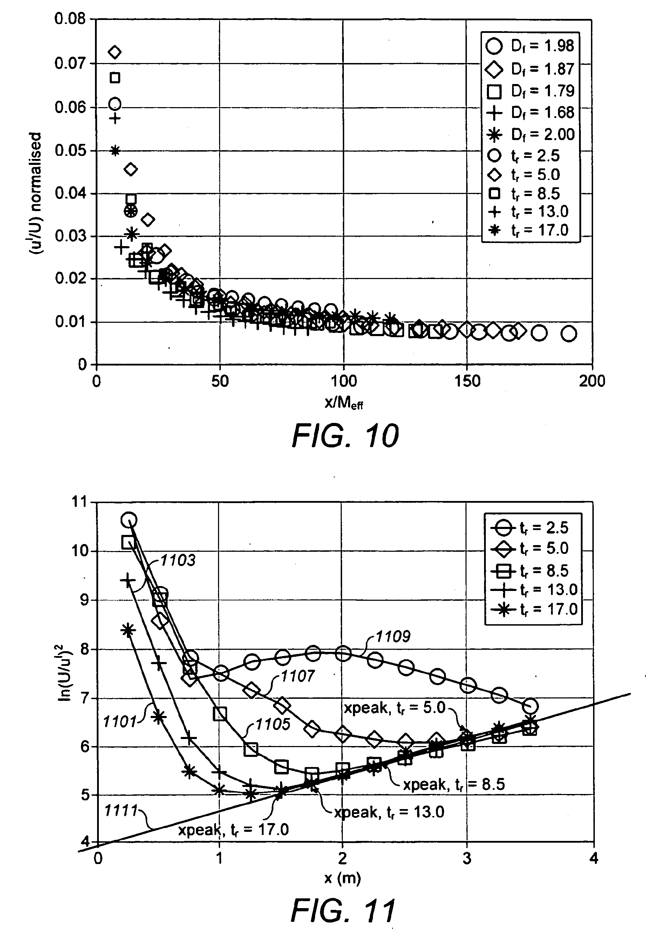

In the course of designing these new and inventive grids, many measurements have been performed in order to characterise the flow field downstream thereof. One such set of measurements involves the turbulence field with axial distance away from the grid (i.e. with increasing values of x). In the course of reviewing the flow field data the inventors identified that for each of the embodiments, the flow field downstream of any grid according to that embodiment could be normalised by certain grid parameters, such that, as a fraction of the mean velocity, the turbulence decay is the same irrespective of grid configuration. This effect is shown in Figure 9 for the case of grids according to the first embodiment, in respect of which the flow field can be normalised by the effective mesh size $M_{eff}$ and the thickness ratio $t_r$; importantly it is to be noted that the flow fields associated with grids according to the prior art (for which the thickness of the elongate members is uniform across the entire grid) can also be normalised by the effective mesh size $M_{eff}$ and the thickness ratio $t_r$ (these grids are identified by the label "classic"). Figure 10 shows normalised turbulence decay for grids according to the second embodiment, and Figure 11 shows the logarithmic normalised turbulence decay for grids according to the third embodiment.

The inventors then realised that these relationships can be used to design a grid configuration selection tool in order to generate a desired turbulence field (u'/U) - in other words, provided the grid can be described by physical parameters thickness ratio, blockage ratio and mesh perimeter ($t_r$, σ and P (by virtue of the definition of the effective mesh size, $M_{eff,} = \dfrac{4T^2(1-\sigma)^{\frac{1}{2}}}{P}$ )), )), the turbulence field downstream of the grid can be predicted.

For grids according to the first embodiment of the invention the expression that governs this grid selection is as follows:

$$(u'/U)^2 = t_r^2 C_{\Delta P} f_1(x/M_{eff}) \tag{1}$$

where $f_1(x/M_{eff})$ is derivable from the empirical data shown in Figure 9. It is to be noted that axial distance from the grid 100 is metered by units of $M_{eff}$ rather than absolute distance, x. As stated above, for any given blockage ratio, σ, the pressure drop $C_{\Delta P}$ has been found to be substantially constant; accordingly, given $C_{\Delta P}$ and $M_{eff}$ the turbulence intensity u'/U and indeed axial decay of turbulence intensity can be controlled by varying the thickness ratio, $t_r$.

Turning again to Figure 10, for the case of grids according to the second embodiment, the expression that governs grid selection is as follows:

$$(u'/U)^2 = t_r C_{\Delta P}(T/L_{max})^2 f_2(x/M_{eff}) \qquad (2)$$

where $L_{max}$ is the length of the elongate member $S_1b_1$ of the structure in the first set S1 and $f_2(x/M_{eff})$ is derivable from the empirical data shown in Figure 10.

Again, axial distance from the grid 200 is metered by units of $M_{eff}$ rather than absolute distance, x and the thickness ratio, $t_r$, is a significant parameter in the control of the magnitude, and axial decay, of turbulence.

In relation to the grids according to the third embodiment, the inventors identified the following relationship as unifying the turbulence decay downstream of the grids:

$$u'^2 = u'^2{}_{peak} \exp[-(x - x_{peak})/l_{turb}] \qquad (3)$$

where $x_{peak}$ is the absolute axial distance downstream of the grid 300 at which the turbulence field is a maximum and $l_{turb}$ is the distance for which the turbulence persists downstream of the grid 300. Referring to Figure 11, an interesting unifying feature of the grids emerges when the logarithmic of this expression is taken:

$\ln(\frac{U}{u'})^2 = \ln(\frac{U}{u'_{peak}})^2 + [\frac{x - x_{peak}}{l_{turb}}]$ , , from which it can be seen that the various flow field profiles 1101, 1103, 1105, 1107, 1109 converge onto linear portion 1111, which corresponds to the latter part of this expression, namely $\frac{x - x_{peak}}{l_{turb}}$ · . The point at which the profiles converge onto linear portion 1111 corresponds to the point downstream at which the turbulence field is at a maximum: $x_{peak}$. The value of this parameter is dependent on the thickness ratio $t_r$ and it can be seen that the higher the thickness ratio $t_r$, the further upstream (i.e. closer to the grid 300) the profile converges onto linear portion 1111. The parameter $x_{peak}$ is defined by various grid parameters, namely

$x_{peak} \approx 75\frac{t_{min}T}{L_{min}}$ where $t_{min}$ and $L_{min}$ are the thickness and length respectively of the smallest structures in the grid 300, while the distance downstream for which the turbulence persists is governed by $l_{turb}$, where $l_{turb} = 0.1\lambda_0 \frac{U\lambda_0}{v}$ , ,

v being the kinematic viscosity of the fluid F.

Figures 9, 10 and 11 are concerned with turbulence decay and identifying those grid parameters that have a controlling influence thereon. However, another important flow field characteristic is that of homogeneity, which defines the variation in turbulence intensity in the three axial dimensions x, y, z. It has been identified that homogeneity increases with fractal grid dimension, $D_f$, so that for example in the case of grids 200 according to the second embodiment, the grid shown in Figure 6j, having the lowest value of $D_f$, generates the least homogeneous turbulence field, while the grid shown in Figure 6g, having the highest value of $D_f$, generates the most homogeneous turbulence field. It is to be noted that the effect of grid arrangement on homogeneity is completely decoupled from its effect on turbulence decay, as can be seen from Figure 10.

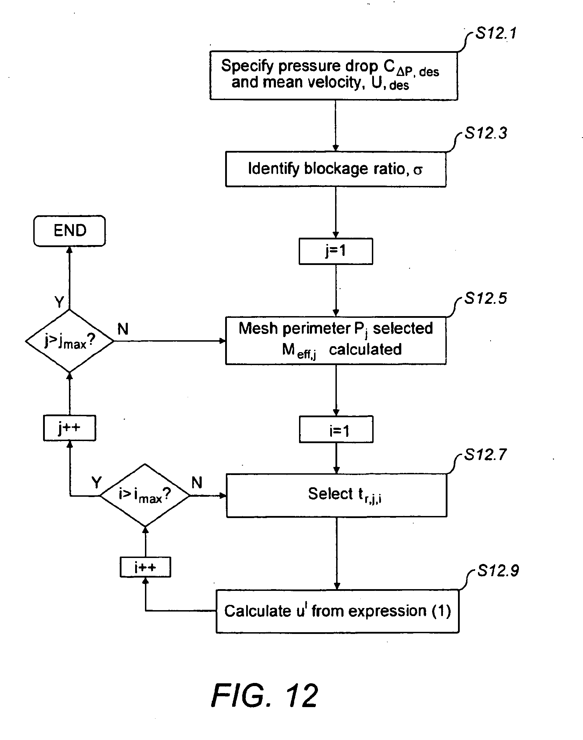

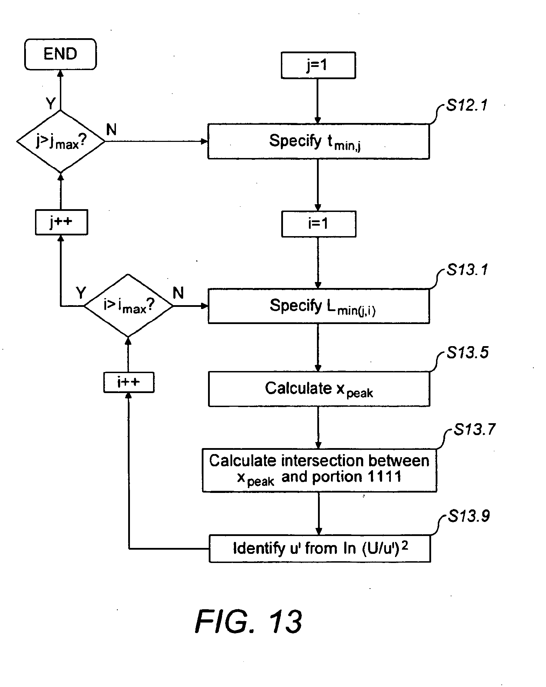

The following description, together with Figures 12 and 13, describe how expressions (1) - (3) can be used in a grid selection routine. Starting with expression (1), and referring to Figure 12, grid selection for the first embodiment starts by specifying the mean velocity $U_{des}$ and desired pressure drop $C_{\Delta P, des}$ (step S12.1); from the empirical data relating pressure drop $C_{\Delta P}$ to blockage ratio, $\sigma$, a corresponding blockage ratio is identified at step S12.3. Having established the blockage ratio, $\sigma$, a first effective grid size, $M_{eff}$ is selected, by setting a value for the perimeter P of the grid (step S12.5); next a first predefined value of the thickness ratio $t_r$ is selected (step S12.7), and these values are inserted into expression (1) for a predefined range of values for x, in order to establish the turbulence velocity values as a function of $M_{eff}/x$ (step S12.9). Once the range of turbulence velocity values has been established, the routine returns to step S12.7 for a second predefined value of the thickness ratio $t_r$, and step S12.9 is repeated for this second value. This is repeated for all of the predefined values of thickness ratio $t_r$, whereupon the routine returns to step S12.5 for different values of grid perimeter P, and indeed the routine can return to step S12.1 and the entire process be repeated for a different pressure drop and thus blockage ratio.

The routine for grids according to the second embodiment is essentially the same as the routine shown in Figure 12, but step S12.9 involves invoking expression (2); in addition, and in view of the fact that expression (2) includes parameter $L_{max}$, an additional iteration can be invoked outside of step S12.1, involving varying of $L_{max}$.

The output of these routines will be a sequence of values of the turbulence intensity, u', for grid parameter values set at instances of steps S12.1, S12.5 and S12.7, and a particular grid can be selected from a comparison between the predicted turbulence decay field and a desired turbulence decay field. Such a tool is particularly useful for applications such as mixing of fluids (whether it be mixing of different fluids or mixing streams of the same fluids, the streams having different temperatures), where the mixing rate is highly correlated with turbulence intensity.

Turning now to the selection routine for grids according to the third embodiment, as will be appreciated from the foregoing, the flow downstream of all of these grids 300 converge onto $\dfrac{x - x_{peak}}{l_{turb}}$ ; ; the routine shown in Figure 13 can be used to determine the point at which the turbulence field is a maximum ($x_{peak}$), in other words the axial distance at which the measurement data converge onto linear portion 1111, and the associated turbulence intensity can be derived from where this value of $x_{peak}$ intersects the linear portion 1111.

It will be appreciated that expressions (1) and (2) can be rearranged so as to express the thickness ratio, $t_r$, as a function of the other parameters in the expression. When suitably rearranged, the expressions can then be used to identify a thickness ratio as a function of these other parameters such that the amount of turbulence intensity would be specified instead of being the subject of the calculations. As a result, and in order to identify the thickness ratio corresponding to specified sets of turbulence intensities, a slightly modified grid selection algorithm to those shown in Figures 12 and 13 would be used.

The above embodiments are to be understood as illustrative examples of the invention. Further embodiments of the invention are envisaged. For example, individual structures could be configured as Koch curve structures and, if the cross section of the conduit 101 were circular instead of rectangular, the grids could be configured so as to have a circular, rather than rectangular, profile.

In relation to the first aspect of the invention, it is assumed that for a grid comprising two or more sets of structures, the surface area (width, length or depth) of elongate members of each respective set of structures is different; it should be appreciated that for grids comprising three or more sets of structures, the surface area of the structures in the third set can be the same as the surface area of one of the other sets. Similarly, for increasing numbers of sets, and provided the minimum condition of two sets having different thicknesses is satisfied, the thickness of a given set of structures can be replicated in respect of different set(s) of structures.

Whilst in the foregoing embodiments any given grid comprises structures of the same shape, a grid could alternatively comprise a plurality of structures, each of a different shape; for example, the first set S1 could comprise a cross-shaped structure, the second set S2 could comprise I-shaped structures, the third set S3 could comprise polygon-shaped structures etc. In addition or as a further alternative, the orientation of structures could vary between sets: for example the polygon-shaped structures could, in some sets, be rotated by an angular extent relative to a previous set.

In the arrangements described above, and as exemplified in the appended Figures, any given grid comprises a symmetrical arrangement of fractal structures. However, a grid could alternatively comprise a non-symmetrical distribution of fractal and/or multi-fractal structures, which is to say that the distribution of fractal/multi-fractal structures within the grid can vary in a nonuniform manner.

As described above, and referring back to Figure 2c, fluid F flows against a first surface portion 201 and along, or past, a second surface portion 203 of the grid 100; the turbulence can be modified by varying the width 209 of the second surface portion 203, essentially introducing flow control via a third dimension. It has been noted by the inventors that varying this third dimension precipitates the decay of the turbulence field downstream of the grid 100, thereby providing a further means of tuning mixing efficiencies and vibration control.

It has been noted that the turbulence control can be realised in a particularly economic and efficient manner with grids according to embodiments of the invention: in particular, grids according to embodiments of the invention enable realisation of a given mixing and/or reaction rate using less energy than is required with known configurations. In particular, embodiments of the invention provide an improved mechanism for mixing in so-called micro channels in which there is otherwise no turbulence. Embodiments of the invention provide a means of introducing flow irregularities over a broad range of small-scales down to the micron scale, thereby artificially introducing turbulence and forcing mixing within the channel. In one arrangement the channel dimension and corresponding overall fractal grid size is of the order 1 cm, but channel dimensions of between 2.5 cm and 10 microns (and corresponding grid sizes) fall within the definition of micro channels, and are thus possible applications for embodiments of the invention. Similarly, fractal grids of the micron-scale can be used for microchip cooling technology as an aid to improving heat transfer from the chips (the use of micron chip sizes presents overheating problems).

In view of the fact that fluid modification apparatus according to embodiments of the invention have a significant effect on flow field parameters such as pressure drop and turbulence intensity, embodiments of the invention can be used in applications such as air braking (e.g. for aeroplanes); aerodynamic control of fluid flow around motor vehicles and motorbikes; control of wind characteristics in sailing applications; among many others: in such applications it will be appreciated that the relative movement is induced by physical movement of the grid relative to the surrounding fluid, in which case the support structure would be affixed, e.g. to the wing of the aeroplane. Alternatively relative movement could be provided by movement on the part of both the grid and the fluid. In addition, fluid modification apparatus according to embodiments of the invention could be used to control of mixing of reacting fluids in vessels and combustion chambers.

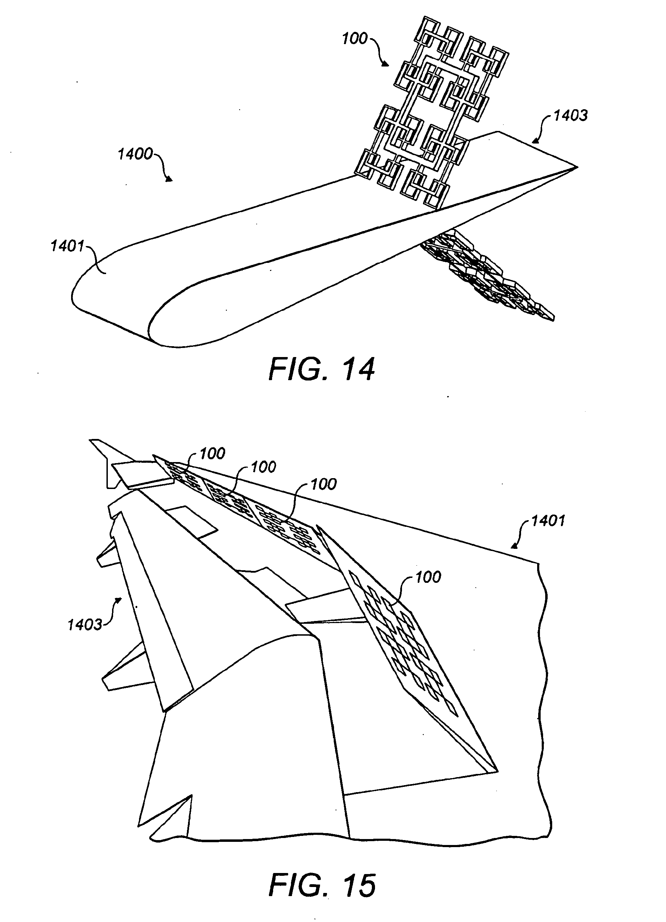

Experimental data taken during landing of an aircraft indicate that, compared with the amount of noise associated with conventional (solid) wing slats and flaps, a reduced amount of noise is generated during landing of an aircraft when the landing slats include fractal airbreaks. Figure 14 shows an airbrake comprising a grid 100 according to an embodiment of the invention, the airbrake being hingedly connected to an aircraft wing 1400 between the leading edge 1401 and the trailing edge 1403 thereof. The fixing arrangement for connecting the fractal airbrake 100 to the wing 1400 preferably includes a lowering and raising mechanism, the operation of which can be dependent on airspeed and controlled by an actuation system (such a configuration being employed in conventional leading edge wing slats mechanisms). One example arrangement is illustrated in Figure 15, which shows a plurality of slats having been deployed, each slat comprising fractal airbrakes 100. As a general design principle, the type of fractal grid and its adaptation can be determined as functions of a number of various fractal, aerodynamic and structural parameters. Indeed, whilst the example shown in Figure 15 shows a similar geometrical configuration between respective fractal airbrakes, each or some of the individual fractal airbreaks could alternatively have different configurations, either in terms of structures making up a given airbreak and/or fractal dimension $D_f$ and/or thickness ratio $t_r$.

Furthermore the fluid modification apparatus can be used to reduce structural vibrations that would otherwise be induced by aerodynamic loading.

Other applications of embodiments of the invention include heat transfer and/or flow oscillations, specifically as a means to control acoustic noise and/or heat transfer to walls of a channel (since embodiments of the invention improve the mixing within the channel, and thereby flatten the heat transfer profile across a given channel cross section).

Whilst the measurement data show that the fluid modification apparatus affects the flow field so as to modify the turbulence intensity therein, the fluid modification apparatus can also be used to modify chemical structures within the fluid, for example, if the elongate members were coated with a catalyst material or a material that reacts with the incoming fluid.

Furthermore, modifications not described above may also be employed without departing from the scope of the invention, which is defined in the accompanying claims.

**Claims**

1.    Fluid flow modification grid (100; 200; 300) for creating turbulence in a fluid (F) when said fluid (F) is moving relative to the fluid flow modification grid (100), the grid (100) comprising:

a plurality of turbulence-creating elements, each turbulence-creating element having a first surface portion (201) against which the fluid (F) can flow and a second surface portion (203) along which the fluid (F) can flow, each surface portion (201; 203) having a surface area associated therewith; and
a support for holding the turbulence-creating elements in the fluid (F) so as to allow relative movement of the fluid (F) around the turbulence-creating elements,
wherein said turbulence-creating elements include at least two different types of element, including a first type of element and a second type of element, and
wherein the first type of element has a first surface area and the second type of element has a second surface area, different to said first surface area, said first and second surface areas having a relationship selected to control the turbulence-creating characteristics of said fluid flow modification grid (100).

2.    Fluid flow modification grid (100; 200; 300) according to claim 1, wherein the first surface portion (201) of the first type of element has a first width (207) and the first surface portion (201) of the second type of element has a second width, different to said first width (207).

3.    Fluid flow modification grid (100; 200; 300) according to claim 1 or claim 2, wherein the first surface portion (201) of the first type of element has a first length (205) and the first surface portion (201) of the second type of element has a second length, different to said first length (205).

4. Fluid flow modification grid (100; 200; 300) according to any one of the preceding claims, wherein the second surface portion (203) of the first type of element has a first width (209) and the second surface portion (203) of the second type of element has a second width, different to the first width (209).

5. Fluid flow modification grid (100; 200; 300) according to any one of the preceding claims, wherein said plurality of turbulence-creating elements are arranged such that at least one of said first type of element is attached to at least one of said second type of element.

6. Fluid flow modification grid (100; 200; 300) according to any one of the preceding claims, wherein said turbulence-creating elements are generally elongate.

7. Fluid flow modification grid (100; 200; 300) according to claim 6, wherein each said surface portion (201; 203) is generally uniform width along its length.

8. Fluid flow modification grid (100; 200; 300) according to any one of the preceding claims, wherein said turbulence-creating elements are arranged in a generally planar configuration.

9. Fluid flow modification grid (100; 200; 300) according to any one of the preceding claims, wherein said turbulence-creating elements are arranged in a fractal configuration.

10. Fluid flow modification grid (100; 200; 300) according to claim 9, wherein the first type of element is arranged at a first level in said fractal configuration and the second type of element is arranged at a second level in said fractal configuration.

11. Fluid flow modification grid (100; 200; 300) according to any one of the preceding claims, wherein the first surface area is related to the second surface area by a ratio within the range of 1.1 and 3.

12. Fluid flow modification grid (100; 200; 300) according to claim 10, wherein the ratio is within the range of 1.2 and 2.7.

13. Fluid flow modification grid (100; 200; 300) according to claim 11 or claim 12, wherein the ratio is within the range of 1.3 and 2.6.

14. Fluid flow modification grid (100; 200; 300) according to any one of claim 11 to claim 13, wherein the ratio is 1.35.

15. Fluid flow modification grid (100; 200; 300) according to any one of claim 11 to claim 13, wherein the ratio is 1.71.

16. Fluid flow modification grid (100; 200; 300) according to any one of claim 11 to claim 13, wherein the ratio is 2.05.

17. Fluid flow modification grid (100; 200; 300) according to any one of claim 11 to claim 13, wherein the ratio is 2.35.

18. Fluid flow modification grid (100; 200; 300) according to any one of claim 11 to claim 13, wherein the ratio is 2.58.

19. Fluid flow modification grid (100; 200; 300) according to any one of the preceding claims, comprising a plurality of sets of elements (S1, S2), wherein a first said set (S1) comprises one of said first type of turbulence-creating element, and a second said set (S2) comprises a plurality of said second type of turbulence-creating element attached to said one element.

20. Fluid flow modification grid (100; 200; 300) according to claim 19, wherein said second set (S2) comprises four of said second type of turbulence-creating element.

21. Fluid flow modification grid (100; 200; 300) according to claim 19 or claim 20, comprising a third type of turbulence-creating element, said third type of turbulence-creating element having a third surface area, which third surface area is different to said first surface area and said second surface area.

22. Fluid flow modification grid (100; 200; 300) according to claim 21, dependent on any one of claim 11 to claim 18, wherein the third surface area is related to the second surface area by the ratio.

23. Fluid flow modification grid (100; 200; 300) according to claim 21, dependent on any one of claim 11 to claim 18, wherein the third surface area is related to the second surface area by a value different to the ratio.

24. Fluid flow modification grid (100; 200; 300) according to any one of the preceding claims, wherein said turbulence-creating elements are arranged in structures (102a; 102b; 102c; 202; 302), each said structure including a plurality of elongate members.

25. Fluid flow modification grid (100; 200; 300) according to claim 24, wherein said structures (102a; 102b; 102c; 202; 302) include a structure which comprises two elongate members, one said elongate member being attached to the other said elongate member part way along respective lengths of respective elongate members.

26. Fluid flow modification grid (100; 200; 300) according to claim 24 or claim 25, wherein said structures (102a; 102b; 102c; 202; 302) include a structure which comprises three elongate members, a first said elongate member having two ends and being attached to a second elongate member and to a third elongate member at respective ends of the first elongate member so as to attach to the second elongate member and the third elongate member part way along their respective lengths.

27. Fluid flow modification grid (100; 200; 300) according to any one of claim 24 to claim 26, wherein said structures (102a; 102b; 102c; 202; 302) include a structure which comprises a plurality of elongate members such that each member is in an end-to-end relationship with another elongate member.

28. Fluid flow modification grid (100; 200; 300) according to any one of claim 24 to claim 27, wherein said structures (102a; 102b; 102c; 202, 302) include a structure which comprises a polygon.

29. Fluid flow modification grid (100; 200; 300) according to according to any one of claim 24 to claim 28, wherein said structures (102a; 102b; 102c; 202; 302) include a structure in which said elongate member is integrally formed with other elongate members of a given structure.

30. Fluid flow modification grid (100; 200; 300) according to any one of claim 24 to claim 29, wherein said structures (102a; 102b; 102c; 202; 302) include a structure (102a; 202a; 302a) which comprises an attachment point ($S_1A_1$; $S_1A_2$) for providing separable interconnection between respective members thereof.

31. Fluid flow modification grid (100; 200; 300) according to any one of claim 24 to claim 30, wherein said structures (102a; 102b; 102c; 202; 302) include a plurality of sets of structures (S1, S2), and one set of structures (S1) comprises elongate members of a length different to that associated with elongate members of another of said sets of structures (S2).

**Patentansprüche**

1. Fluidstrommodifikationsgitter (100; 200; 300) zum Erzeugen einer Turbulenz in einem Fluid (F), wenn das Fluid (F) sich relativ zu dem Fluidstrommodifikationsgitter (100) bewegt, umfassend:

   eine Mehrzahl von Turbulenz erzeugenden Elementen, wobei jedes Turbulenz erzeugende Element einen ersten Oberflächenabschnitt (201), gegen den das Fluid (F) fließen kann, und einen zweiten Oberflächenabschnitt (203), entlang dessen das Fluid (F) fließen kann, aufweist, wobei jeder Oberflächenabschnitt (201; 203) einen diesem zugeordneten Oberflächenbereich aufweist; und
   einen Halt zum Halten der Turbulenz erzeugenden Elemente in dem Fluid (F), um eine relative Bewegung des Fluids (F) um die Turbulenz erzeugenden Elemente herum zu ermöglichen,
   wobei die Turbulenz erzeugenden Elemente zumindest zwei verschiedene Typen von Element beinhalten, die einen ersten Typ von Element und einen zweiten Typ von Element beinhalten, und
   wobei der erste Typ von Element einen ersten Oberflächenbereich aufweist, und wobei der zweite Typ von Element einen zweiten Oberflächenbereich aufweist, der von dem ersten Oberflächenbereich verschieden ist, wobei der erste und der zweite Oberflächenbereich eine Beziehung aufweisen, die ausgewählt ist, um die Turbulenz erzeugenden Eigenschaften des Fluidstrommodifikationsgitters (100) zu kontrollieren.

2. Fluidstrommodifikationsgitter (100; 200; 300) nach Anspruch 1, wobei der erste Oberflächenabschnitt (201) des ersten Typs von Element eine erste Breite (207) aufweist, und wobei der erste Oberflächenabschnitt (201) des zweiten Typs von Element eine zweite Breite aufweist, die von der ersten Breite (207) verschieden ist.

3. Fluidstrommodifikationsgitter (100; 200; 300) nach Anspruch 1 oder 2, wobei der erste Oberflächenabschnitt (201) des ersten Typs von Element eine erste Länge (205) aufweist, und wobei der erste Oberflächenabschnitt (201) des zweiten Typs von Element eine zweite Länge aufweist, die von der ersten Länge (205) verschieden ist.

4. Fluidstrommodifikationsgitter (100; 200; 300) nach einem der vorangegangenen Ansprüche, wobei der zweite Oberflächenabschnitt (203) des ersten Typs von Element eine erste Breite (209) aufweist, und wobei der zweite Oberflächenabschnitt (203) des zweiten Typs von Element eine zweite Breite aufweist, die von der ersten Breite (209) verschieden ist.

5. Fluidstrommodifikationsgitter (100; 200; 300) nach einem der vorangegangen Ansprüche, wobei die Mehrzahl von Turbulenz erzeugenden Elementen so angeordnet ist, dass zumindest ein Element des ersten Typs von Element an zumindest einem Element des zweiten Typs von Element angebracht ist.

6. Fluidstrommodifikationsgitter (100; 200; 300) nach einem der vorangegangen Ansprüche, wobei die Turbulenz erzeugenden Elemente im Wesentlichen länglich sind.

7. Fluidstrommodifikationsgitter (100; 200; 300) nach Anspruch 6, wobei jeder Oberflächenabschnitt (201; 203) entlang seiner Länge eine im Wesentlichen gleichförmige Breite aufweist.

8. Fluidstrommodifikationsgitter (100; 200; 300) nach einem der vorangegangenen Ansprüche, wobei die Turbulenz erzeugenden Elemente in einer im Wesentlichen planaren Konfiguration angeordnet sind.

9. Fluidstrommodifikationsgitter (100; 200; 300) nach einem der vorangegangen Ansprüche, wobei die Turbulenz erzeugenden Elemente in einer fraktalen Konfiguration angeordnet sind.

10. Fluidstrommodifikationsgitter (100; 200; 300) nach Anspruch 9, wobei der erste Typ von Element auf einem ersten Level in der fraktalen Konfiguration angeordnet ist, und wobei der zweite Typ von Element auf einem zweiten Level in der fraktalen Konfiguration angeordnet ist.

11. Fluidstrommodifikationsgitter (100; 200; 300) nach einem der vorangegangen Ansprüche, wobei der erste Oberflächenbereich zu dem zweiten Oberflächenbereich durch ein Verhältnis im Bereich von 1.1 bis 3 in Beziehung steht.

12. Fluidstrommodifikationsgitter (100; 200; 300) nach Anspruch 10, wobei das Verhältnis im Bereich von 1.2 bis 2.7 liegt.

13. Fluidstrommodifikationsgitter (100; 200; 300) nach Anspruch 11 oder 12, wobei das Verhältnis im Bereich von 1.3 bis 2.6 liegt.

14. Fluidstrommodifikationsgitter (100; 200; 300) nach einem der Ansprüche 11 bis 13, wobei das Verhältnis 1.35 beträgt.

15. Fluidstrommodifikationsgitter (100; 200; 300) nach einem der Ansprüche 11 bis 13, wobei das Verhältnis 1.71 beträgt.

16. Fluidstrommodifikationsgitter (100; 200; 300) nach einem der Ansprüche 11 bis 13, wobei das Verhältnis 2.05 beträgt.

17. Fluidstrommodifikationsgitter (100; 200; 300) nach einem der Ansprüche 11 bis 13, wobei das Verhältnis 2.35 beträgt.

18. Fluidstrommodifikationsgitter (100; 200; 300) nach einem der Ansprüche 11 bis 13, wobei das Verhältnis 2.58 beträgt.

19. Fluidstrommodifikationsgitter (100; 200; 300) nach einem der vorangegangenen Ansprüche, umfassend eine Mehrzahl von Sätzen von Elementen (S1, S2), wobei ein erster Satz (S1) ein Element des ersten Typs von Turbulenz erzeugendem Element umfasst, und wobei ein zweiter Satz (S2) eine Mehrzahl von Elementen des zweiten Typs von Turbulenz erzeugendem Element umfasst, die an dem einen Element angebracht sind.

20. Fluidstrommodifikationsgitter (100; 200; 300) nach Anspruch 19, wobei der zweite Satz (S2) vier Elemente des zweiten Typs von Turbulenz erzeugendem Element umfasst.

21. Fluidstrommodifikationsgitter (100; 200; 300) nach Anspruch 19 oder 20, umfassend einen dritten Typ von Turbulenz erzeugendem Element, wobei der dritte Typ von Turbulenz erzeugendem Element einen dritten Oberflächenbereich aufweist, der von dem ersten Oberflächenbereich und dem zweiten Oberflächenbereich verschieden ist.

**22.** Fluidstrommodifikationsgitter (100; 200; 300) nach Anspruch 21, wenn dieser von einem der Ansprüche 11 bis 18 abhängt, wobei der dritte Oberflächenbereich zu dem zweiten Oberflächenbereich durch das Verhältnis in Beziehung steht.

**23.** Fluidstrommodifikationsgitter (100; 200; 300) nach Anspruch 21, wenn dieser von einem der Ansprüche 11 bis 18 abhängt, wobei der dritte Oberflächenbereich zu dem zweiten Oberflächenbereich durch einen Wert in Beziehung steht, der von dem Verhältnis verschieden ist.

**24.** Fluidstrommodifikationsgitter (100; 200; 300) nach einem der vorangegangen Ansprüche, wobei die Turbulenz erzeugenden Elemente in Strukturen (102a; 102b; 102c; 202; 302) angeordnet sind, wobei jede Struktur eine Mehrzahl von länglichen Teilen beinhaltet.

**25.** Fluidstrommodifikationsgitter (100, 200; 300) nach Anspruch 24, wobei die Strukturen (102a; 102b; 102c; 202; 302) eine Struktur beinhalten, die zwei längliche Teile umfasst, wobei eines der länglichen Teile an dem anderen länglichen Teil auf halbem Weg entlang der entsprechenden Längen entsprechender länglicher Teile angebracht ist.

**26.** Fluidstrommodifikationsgitter (100; 200; 300) nach Anspruch 24 oder 25, wobei die Strukturen (102a; 102b; 102c; 202; 302) eine Struktur beinhalten, die drei längliche Teile umfasst, wobei ein erstes längliches Teil zwei Enden aufweist und an seinen entsprechenden Enden an einem zweiten länglichen Teil und einem dritten länglichen Teil so angebracht ist, dass es an dem zweiten länglichen Teil und dem dritten länglichen Teil auf halbem Weg entlang ihrer entsprechenden Längen angebracht ist.

**27.** Fluidstrommodifikationsgitter (100; 200; 300) nach einem der Ansprüche 24 bis 26, wobei die Strukturen (102a; 102b; 102c; 202; 302) eine Struktur beinhalten, die eine Mehrzahl von länglichen Teilen umfasst, so dass jedes Teil in einer Ende-zu-Ende-Beziehung mit einem anderen länglichen Teil steht.

**28.** Fluidstrommodifikationsgitter (100; 200; 300) nach einem der Ansprüche 24 bis 27, wobei die Strukturen (102a; 102b; 102c; 202; 302) eine Struktur beinhalten, die ein Polygon umfasst.

**29.** Fluidstrommodifikationsgitter (100; 200; 300) nach einem der Ansprüche 24 bis 28, wobei die Strukturen (102a; 102b; 102c; 202; 302) eine Struktur beinhalten, in der das längliche Teil integral mit anderen länglichen Teilen einer gegebenen Struktur ausgeformt ist.

**30.** Fluidstrommodifikationsgitter (100; 200; 300) nach einem der Ansprüche 24 bis 29, wobei die Strukturen (102a; 102b; 102c; 202; 302) eine Struktur (102a; 202a; 302a) beinhalten, die einen Anbringungspunkt ($S_1A_1$; $S_1A_2$) umfasst, um eine trennbare Verbindung zwischen entsprechenden Teilen der Struktur zur Verfügung zu stellen.

**31.** Fluidstrommodifikationsgitter (100; 200; 300) nach einem der Ansprüche 24 bis 30, wobei die Strukturen (102a; 102b; 102c; 202; 302) eine Mehrzahl von Sätzen von Strukturen (S1, S2) beinhalten, und wobei ein Satz von Strukturen (S1) längliche Teile einer Länge umfasst, die verschieden ist von der Länge, die länglichen Teilen eines anderen Satzes der Sätze von Strukturen (S2) zugeordnet ist.

## Revendications

**1.** Grille de modification de flux de fluide (100 ; 200 ; 300) pour créer une turbulence dans un fluide (F) quand ledit fluide (F) se déplace par rapport à la grille de modification de flux de fluide (100), la grille (100) comprenant :

une pluralité d'éléments générateurs de turbulence, chaque élément générateur de turbulence ayant une première portion de surface (201) contre laquelle le fluide (F) peut s'écouler et une deuxième portion de surface (203) le long de laquelle le fluide (F) peut s'écouler, chaque portion de surface (201 ; 203) ayant une superficie associée à celle-ci ; et
un support pour maintenir les éléments générateurs de turbulence dans le fluide (F) de manière à permettre un mouvement relatif du fluide (F) autour des éléments générateurs de turbulence,
dans laquelle lesdits éléments générateurs de turbulence comprennent au moins deux types d'élément différents, comprenant un premier type d'élément et un deuxième type d'élément, et
dans laquelle le premier type d'élément a une première superficie et le deuxième type d'élément a une deuxième superficie, différente de ladite première superficie, lesdites première et deuxième superficies ayant une relation sélectionnée pour contrôler les caractéristiques de génération de turbulence de ladite grille de modification de flux de fluide (100).

2. Grille de modification de flux de fluide (100 ; 200 ; 300) selon la revendication 1, dans laquelle la première portion de surface (201) du premier type d'élément a une première largeur (207) et la première portion de surface (201) du deuxième type d'élément a une deuxième largeur, différente de ladite première largeur (207).

3. Grille de modification de flux de fluide (100 ; 200 ; 300) selon la revendication 1 ou la revendication 2, dans laquelle la première portion de surface (201) du premier type d'élément a une première longueur (205) et la première portion de surface (201) du deuxième type d'élément a une deuxième longueur, différente de ladite première longueur (205).

4. Grille de modification de flux de fluide (100 ; 200 ; 300) selon l'une quelconque des revendications précédentes, dans laquelle la deuxième portion de surface (203) du premier type d'élément a une première largeur (209) et la deuxième portion de surface (203) du deuxième type d'élément a une deuxième largeur, différente de ladite première largeur (209).

5. Grille de modification de flux de fluide (100 ; 200 ; 300) selon l'une quelconque des revendications précédentes, dans laquelle ladite pluralité d'éléments générateurs de turbulence est agencée de manière qu'au moins un dudit premier type d'élément soit fixé à au moins un dudit deuxième type d'élément.

6. Grille de modification de flux de fluide (100 ; 200 ; 300) selon l'une quelconque des revendications précédentes, dans laquelle lesdits éléments générateurs de turbulence sont généralement allongés.

7. Grille de modification de flux de fluide (100 ; 200 ; 300) selon la revendication 6, dans laquelle chaque dite portion de surface (201 ; 203) est de largeur généralement uniforme suivant sa longueur.

8. Grille de modification de flux de fluide (100 ; 200 ; 300) selon l'une quelconque des revendications précédentes, dans laquelle lesdits éléments générateurs de turbulence sont agencés dans une configuration généralement plane.

9. Grille de modification de flux de fluide (100 ; 200 ; 300) selon l'une quelconque des revendications précédentes, dans laquelle lesdits éléments générateurs de turbulence sont agencés dans une configuration fractale.

10. Grille de modification de flux de fluide (100 ; 200 ; 300) selon la revendication 9, dans laquelle le premier type d'élément est disposé à un premier niveau dans ladite configuration fractale et le deuxième type d'élément est disposé à un deuxième niveau dans ladite configuration fractale.

11. Grille de modification de flux de fluide (100 ; 200 ; 300) selon l'une quelconque des revendications précédentes, dans laquelle la première superficie est liée à la deuxième superficie par un rapport dans la plage allant de 1,1 à 3.

12. Grille de modification de flux de fluide (100 ; 200 ; 300) selon la revendication 10, dans laquelle le rapport est dans la plage allant de 1,2 à 2,7.

13. Grille de modification de flux de fluide (100 ; 200 ; 300) selon la revendication 11 ou la revendication 12, dans laquelle le rapport est dans la plage allant de 1,3 à 2,6.

14. Grille de modification de flux de fluide (100 ; 200 ; 300) selon l'une quelconque des revendications 11 à 13, dans laquelle le rapport est de 1,35.

15. Grille de modification de flux de fluide (100 ; 200 ; 300) selon l'une quelconque des revendications 11 à 13, dans laquelle le rapport est de 1,71.

16. Grille de modification de flux de fluide (100 ; 200 ; 300) selon l'une quelconque des revendications 11 à 13, dans laquelle le rapport est de 2,05.

17. Grille de modification de flux de fluide (100 ; 200 ; 300) selon l'une quelconque des revendications 11 à 13, dans laquelle le rapport est de 2,35.

18. Grille de modification de flux de fluide (100 ; 200 ; 300) selon l'une quelconque des revendications 11 à 13, dans laquelle le rapport est de 2,58.

19. Grille de modification de flux de fluide (100 ; 200 ; 300) selon l'une quelconque des revendications précédentes, comprenant une pluralité d'ensembles d'éléments (S1, S2), dans laquelle un premier dit ensemble (S1) comprend un élément dudit premier type d'élément générateur de turbulence et un deuxième dit ensemble (S2) comprend une pluralité dudit deuxième type d'élément générateur de turbulence fixé audit un élément.

20. Grille de modification de flux de fluide (100 ; 200 ; 300) selon la revendication 19, dans laquelle ledit deuxième ensemble (S2) comprend quatre éléments dudit deuxième type d'élément générateur de turbulence.

21. Grille de modification de flux de fluide (100 ; 200 ; 300) selon la revendication 19 ou la revendication 20, comprenant un troisième type d'élément générateur de turbulence, ledit troisième type d'élément générateur de turbulence ayant une troisième superficie, laquelle troisième superficie est différente de ladite première superficie et de ladite deuxième superficie.

22. Grille de modification de flux de fluide (100 ; 200 ; 300) selon la revendication 21, dépendante de l'une quelconque des revendications 11 à 18, dans laquelle la troisième superficie est liée à la deuxième superficie par le rapport.

23. Grille de modification de flux de fluide (100 ; 200 ; 300) selon la revendication 21, dépendante de l'une quelconque des revendications 11 à 18, dans laquelle la troisième superficie est liée à la deuxième superficie par une valeur différente du rapport.

24. Grille de modification de flux de fluide (100 ; 200 ; 300) selon l'une quelconque des revendications précédentes, dans laquelle lesdits éléments générateurs de turbulence sont agencés en structures (102a ; 102b ; 102c ; 202 ; 302), chaque dite structure comprenant une pluralité d'éléments allongés.

25. Grille de modification de flux de fluide (100 ; 200 ; 300) selon la revendication 24, dans laquelle lesdites structures (102a ; 102b ; 102c ; 202 ; 302) comprennent une structure qui comprend deux éléments allongés, un dit élément allongé étant fixé à l'autre dit élément allongé partiellement suivant des longueurs respectives des éléments allongés respectifs.

26. Grille de modification de flux de fluide (100 ; 200 ; 300) selon la revendication 24 ou la revendication 25, dans laquelle lesdites structures (102a ; 102b ; 102c ; 202 ; 302) comprennent une structure qui comprend trois éléments allongés, un premier dit élément allongé ayant deux extrémités et étant fixé à un deuxième élément allongé et à un troisième élément allongé à des extrémités respectives du premier élément allongé de manière à se relier au deuxième élément allongé et au troisième élément allongé partiellement suivant leurs longueurs respectives.

27. Grille de modification de flux de fluide (100 ; 200 ; 300) selon l'une quelconque des revendications 24 à 26, dans laquelle lesdites structures (102a ; 102b ; 102c ; 202 ; 302) comprennent une structure qui comprend une pluralité d'éléments allongés de sorte que chaque élément soit en relation bout à bout avec un autre élément allongé.

28. Grille de modification de flux de fluide (100 ; 200 ; 300) selon l'une quelconque des revendications 24 à 27, dans laquelle lesdites structures (102a ; 102b ; 102c ; 202 ; 302) comprennent une structure qui comprend un polygone.

29. Grille de modification de flux de fluide (100 ; 200 ; 300) selon l'une quelconque des revendications 24 à 28, dans laquelle lesdites structures (102a ; 102b ; 102c ; 202 ; 302) comprennent une structure dans laquelle ledit élément allongé est formé d'une seule pièce avec d'autres éléments allongés d'une structure donnée.

30. Grille de modification de flux de fluide (100 ; 200 ; 300) selon l'une quelconque des revendications 24 à 29, dans laquelle lesdites structures (102a ; 102b ; 102c ; 202 ; 302) comprennent une structure (102a ; 202a ; 302a) qui comprend un point de liaison ($S_1A_1$ ; $S_1A_2$) pour fournir une interconnexion séparable entre des éléments respectifs de celles-ci.

31. Grille de modification de flux de fluide (100 ; 200 ; 300) selon l'une quelconque des revendications 24 à 30, dans laquelle lesdites structures (102a ; 102b ; 102c ; 202 ; 302) comprennent une pluralité d'ensembles de structures (S1, S2), et un ensemble de structures (S1) comprend des éléments allongés d'une longueur différente de celle associée à des éléments allongés d'un autre desdits ensembles de structures (S2).

*FIG. 1a*

*FIG. 1b*

EP 2 004 314 B1

$102a = S_1b_1, S_1b_2$

$102b = S_2b_1, S_2b_4$

$102c = S_2b_2, S_2b_3$

FIG. 2a

$102a = S_1b_1, S_1b_2$

$102b = S_2b_1, S_2b_4$

$102c = S_2b_2, S_2b_3$

FIG. 2b

FIG. 2c

FIG. 3a

FIG. 3b

FIG. 3c

FIG. 3d

FIG. 3e

✳ Cross Grids
— Classic, Round Bars
- - - Classic, Square Bars
⊖ I Grids 200
△ Square Grids 300

FIG. 4

FIG. 5a

$$202a = S_1 b_1, S_1 b_2, S_1 b_3$$

$$202b = S_2 b_1, S_2 b_2, S_2 b_3$$

$$202c = S_2 b_4, S_2 b_5, S_2 b_6$$

$$202d = S_2 b_7, S_2 b_8, S_2 b_9$$

$$202e = S_2 b_{10}, S_2 b_{11}, S_2 b_{12}$$

FIG. 5b

$$202a = S_1 b_1, S_1 b_2, S_1 b_3$$

$$202b = S_2 b_1, S_2 b_2, S_2 b_3$$

$$202c = S_2 b_4, S_2 b_5, S_2 b_6$$

$$202d = S_2 b_7, S_2 b_8, S_2 b_9$$

$$202e = S_2 b_{10}, S_2 b_{11}, S_2 b_{12}$$

FIG. 6a

FIG. 6b

FIG. 6c

FIG. 6d

**FIG. 6e**

**FIG. 6f**

**FIG. 6g**

**FIG. 6h**

FIG. 6i

FIG. 6j

$302a = S_1b_1 , S_1b_2 , S_1b_3 , S_1b_4$

$302b = S_2b_1 , S_2b_2 , S_2b_3 , S_2b_4$

$302c = S_2b_5 , S_2b_6 , S_2b_7 , S_2b_8$

$302d = S_2b_9 , S_2b_{10} , S_2b_{11} , S_2b_{12}$

$302e = S_2b_{13} , S_2b_{14} , S_2b_{15} , S_2b_{16}$

## FIG. 7a

FIG. 7b

$302a = S_1b_1, S_1b_2, S_1b_3, S_1b_4$

$302b = S_2b_1, S_2b_2, S_2b_3, S_2b_4$

$302c = S_2b_5, S_2b_6, S_2b_7, S_2b_8$

$302d = S_2b_9, S_2b_{10}, S_2b_{11}, S_2b_{12}$

$302e = S_2b_{13}, S_2b_{14}, S_2b_{15}, S_2b_{16}$

$302a = S_1b_1, S_1b_2, S_1b_3, S_1b_4$

$302b = S_2b_1, S_2b_2, S_2b_3, S_2b_4$

$302c = S_2b_5, S_2b_6, S_2b_7, S_2b_8$

$302d = S_2b_9, S_2b_{10}, S_2b_{11}, S_2b_{12}$

$302e = S_2b_{13}, S_2b_{14}, S_2b_{15}, S_2b_{16}$

FIG. 7c

FIG. 8a

FIG. 8b

FIG. 8c

FIG. 8d

FIG. 8e

FIG. 8f

## FIG. 8g

## FIG. 9

FIG. 10

FIG. 11

```
                                                              ┌─ S12.1
                         ┌──────────────────────────────────┐
                         │  Specify pressure drop C_{ΔP, des} │
                         │    and mean velocity, U, des        │
                         └──────────────────────────────────┘
                                         │
                                         │                    ┌─ S12.3
                         ┌──────────────────────────────────┐
                         │   Identify blockage ratio, σ       │
                         └──────────────────────────────────┘
                                         │
        ┌───────┐                        │
        │  END  │                   ┌─────────┐
        └───────┘                   │   j=1   │
            ↑                       └─────────┘
          Y │                            │
      ◇─────┴──────◇                     │              ┌─ S12.5
      ╱  j > j_max? ╲   N   ┌──────────────────────────────────┐
      ╲            ╱ ─────→ │  Mesh perimeter P_j selected       │
        ◇────────◇          │      M_{eff,j}  calculated          │
            ↑               └──────────────────────────────────┘
            │                            │
        ┌───────┐                        │
        │  j++  │                   ┌─────────┐
        └───────┘                   │   i=1   │
            ↑                       └─────────┘
          Y │                            │
      ◇─────┴──────◇                     │              ┌─ S12.7
      ╱  i > i_max? ╲   N   ┌──────────────────────────────────┐
      ╲            ╱ ─────→ │         Select t_{r,j,i}           │
        ◇────────◇          └──────────────────────────────────┘
            ↑                            │
        ┌───────┐                        │              ┌─ S12.9
        │  i++  │          ┌──────────────────────────────────┐
        └───────┘ ←─────── │ Calculate u^i from expression (1)  │
                           └──────────────────────────────────┘
```

## FIG. 12

END

Y

j>$j_{max}$?    N    ⟶    Specify $t_{min,j}$    ⌐S12.1

j++

i=1

Y    i>$i_{max}$?    N    ⟶    Specify $L_{min(j,i)}$    ⌐S13.1

i++

Calculate $x_{peak}$    ⌐S13.5

Calculate intersection between
$x_{peak}$ and portion 1111    ⌐S13.7

Identify u' from ln $(U/u')^2$    ⌐S13.9

j=1

FIG. 13

38

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02092207 A
- WO 066257 A